# EUROPEAN PATENT APPLICATION

(11) **EP 4 557 865 A1**
(43) Date of publication of application: **21.05.2025**
(21) Application number: 23851639.7
(22) Date of filing: 31.07.2023
(51) Int. Cl.: H04W 74/00

(54) **COMMUNICATION METHOD AND APPARATUS**

(30) Priority: 12.08.2022 CN 202210967585
(71) Applicant: Huawei Technologies Co., Ltd., Shenzhen, Guangdong 518129 (CN)
(72) Inventor: QI, Hong, Shenzhen, Guangdong 518129 (CN); SU, Hongjia, Shenzhen, Guangdong 518129 (CN); LU, Lei, Shenzhen, Guangdong 518129 (CN); JIAO, Ruicheng, Shenzhen, Guangdong 518129 (CN)
(74) Representative: Goddar, Heinz J.
(86) International application number: PCT/CN2023/110390
(87) International publication number: WO 2024/032418

(57) **Abstract**

This application provides a communication method and apparatus, so that a terminal device determines a duration of a cyclic prefix extension CPE. The method includes: A first terminal device determines a duration of a cyclic prefix extension CPE based on a priority of sidelink information or a preconfigured duration or parameter, and sends the CPE. In this way, understandings of terminal devices for a manner of determining the duration of the CPE are aligned, to reduce a probability that different terminal devices conflict with each other or block each other, and improve communication efficiency.

## Description

### CROSS-REFERENCE TO RELATED APPLICATIONS

This application claims priority to Chinese Patent Application No. 202210967585.9, filed with the China National Intellectual Property Administration on August 12, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless communication system, a frequency band used by a communication device may include a licensed (Licensed) spectrum and an unlicensed (Unlicensed) spectrum. On the licensed spectrum, the communication device uses a spectrum resource based on scheduling of a central node. On an unlicensed frequency band, the communication device contends for a channel based on a channel access mechanism (for example, a listen-before-talk (listen-before-talk, LBT) mechanism).

In a sidelink (sidelink, SL) in unlicensed spectrum (SL-U for short) scenario, before sending sidelink data to another terminal device, a terminal device needs to perform listen-before-talk (listen-before-talk, LBT). To be specific, before accessing a channel and starting to send data, the terminal device needs to listen to whether the channel is idle. If the channel has been idle for a specific period of time, the terminal device may access the channel. However, in a same slot, if a plurality of terminal devices all learn through listening that the channel is idle, and simultaneously access the same channel in a next slot, the plurality of terminal devices may conflict with each other, and communication efficiency is affected.

In new radio in unlicensed spectrum (new radio in unlicensed spectrum, NR-U), a communication device may preempt a channel by sending a cyclic prefix extension (cyclic prefix extension, CPE). However, a duration of the CPE in the NR-U is determined in a random manner. If a terminal device in the SL-U also determines a duration of a CPE in a random manner, and sends the CPE to preempt a channel, different terminal devices may block each other, and communication efficiency in an SL-U system is affected.

In conclusion, how to improve communication efficiency in the SL-U system still needs to be further studied.

### SUMMARY

This application provides a communication method and apparatus, to reduce a probability that different terminal devices conflict with each other or block each other, and improve communication efficiency in an SL-U system.

According to a first aspect, an embodiment of this application provides a communication method. The method may be applied to a first terminal device or a module (for example, a chip) in the first terminal device. For example, the method is applied to the first terminal device. In the method, the first terminal device determines a duration of a CPE based on a priority of sidelink information, and sends the CPE.

In this way, the first terminal device determines the duration of the CPE based on the priority of the sidelink information. In comparison with a solution in which the first terminal device randomly selects one duration from a plurality of durations as the duration of the CPE, in this way, a probability that different terminal devices conflict with each other or block each other is effectively reduced, communication efficiency in an SL-U system is improved, and it is convenient to ensure that a terminal device with a high service priority preempts a channel.

In a possible design, the method further includes: sending first sidelink information. The CPE is in a first time unit, the first sidelink information is in a second time unit, and the second time unit is a next time unit of the first time unit.

In a possible design, the method further includes: sending first sidelink control information SCI, where the first SCI indicates a time domain resource and a frequency domain resource of the first sidelink information sent by the first terminal device; and/or receiving second SCI from a second terminal device, where the second SCI indicates a time domain resource and a frequency domain resource of second sidelink information sent by the second terminal device. The time domain resource of the first sidelink information sent by the first terminal device and the time domain resource of the second sidelink information are in the second time unit, the frequency domain resource of the first sidelink information and the frequency domain resource of the second sidelink information are on a first channel, and the frequency domain resource of the second sidelink information is different from the frequency domain resource of the first sidelink information.

In a possible design, the second SCI further indicates a priority of the second sidelink information.

In this way, because the second SCI further indicates the priority of the second sidelink information, after receiving the second SCI, the first terminal device may obtain the priority of the second sidelink information.

In a possible design, the priority of the sidelink information is a priority of the first sidelink information, and the first sidelink information is sidelink information of the first terminal device.

In this way, when a plurality of terminal devices need to send sidelink information on a frequency domain resource of a same channel in a same time unit, the plurality of terminal devices may determine the duration of the CPE based on priorities of respective sidelink information. Because priorities of sidelink information of different terminal devices may be different, a duration that is of the CPE and that is determined by the different terminal devices may be different. Therefore, a probability that the plurality of terminal devices conflict with each other is reduced, and it is convenient to ensure that a terminal device with a high service priority preempts a channel.

In a possible design, the first terminal device sends the first sidelink information in all frequency domain units of the channel.

In a possible design, the priority of the sidelink information is a priority of the first sidelink information, the priority of the first sidelink information is higher than the priority of the second sidelink information, and the second sidelink information is sidelink information of the second terminal device; or the priority of the sidelink information is the priority of the second sidelink information, and a priority of the first sidelink information is lower than the priority of the second sidelink information.

In this way, when the first terminal device needs to send the first sidelink information on a frequency domain resource of the first channel in the second time unit, and the first terminal device learns through listening that the second terminal device reserves the frequency domain resource of the first channel in the second time unit, the first terminal device may determine the duration of the CPE based on the highest priority in the priority of the first sidelink information and the priority of the second sidelink information, to increase a probability that the first terminal device successfully accesses the channel.

In a possible design, the priority of the sidelink information corresponds to at least one duration; and the determining a duration of a CPE based on a priority of sidelink information includes: determining the duration of the CPE based on a first duration in the at least one duration.

In a possible design, the determining the duration of the CPE based on a first duration in the at least one duration includes: determining that the duration of the CPE is the first duration; or determining that the duration of the CPE is a difference between a third duration and the first duration. The third duration is predefined or preconfigured.

In a possible design, the priority of the sidelink information corresponds to at least one parameter; the determining a duration of a CPE based on a priority of sidelink information includes: determining the duration of the CPE based on a first parameter in the at least one parameter.

In a possible design, the determining the duration of the CPE based on a first parameter in the at least one parameter includes: determining that the duration of the CPE is a product of the first parameter and a second duration, where the second duration is predefined or preconfigured; or determining that the duration of the CPE is a difference between a third duration and the product, where the third duration is predefined or preconfigured.

In a possible design, the second duration is 9 microseconds.

In a possible design, the sidelink information is carried on a PSSCH.

According to a second aspect, an embodiment of this application provides a communication method. The method may be applied to a first terminal device or a module (for example, a chip) in the first terminal device. For example, the method is applied to the first terminal device. In the method, the first terminal device determines a duration of a CPE based on a fourth duration or a second parameter; and sends the CPE. The fourth duration is predefined or preconfigured, and the second parameter is predefined or preconfigured.

In this way, when a plurality of terminal devices need to send sidelink information on different frequency domain resources of a same channel in a same time unit, the plurality of terminal devices may determine the duration of the CPE based on a predefined or preconfigured duration or parameter, so that the plurality of terminal devices simultaneously access the channel, to prevent the plurality of terminal devices from blocking each other.

In a possible design, the first terminal device sends the first sidelink information in some frequency domain units of the same channel.

In a possible design, the method further includes: sending first sidelink information. The CPE is in a first time unit, the first sidelink information is in a second time unit, and the second time unit is a next time unit of the first time unit.

In a possible design, the method further includes: sending first sidelink control information SCI. The first SCI indicates a time domain resource and a frequency domain resource of the first sidelink information sent by the first terminal device.

For example, the time domain resource of the first sidelink information is in the second time unit, and the frequency domain resource of the first sidelink information is on a first channel. In other words, when the first terminal device reserves a frequency domain resource of the first channel in the second time unit, the first terminal device may determine the duration of the CPE based on the fourth duration or the second parameter. In this case, if a plurality of other terminal devices also reserve the frequency domain resource of the first channel in the second time unit, the plurality of terminal devices may all determine the duration of the CPE based on the fourth duration or the second parameter, so that the first terminal device and the plurality of terminal devices can simultaneously access the channel, to prevent different terminal devices from blocking each other.

In a possible design, the method further includes: receiving second SCI from a second terminal device, where the second SCI indicates a time domain resource and a frequency domain resource of second sidelink information sent by the second terminal device. The time domain resource of the first sidelink information sent by the first terminal device and the time domain resource of the second sidelink information are in the second time unit, the frequency domain resource of the first sidelink information and the frequency domain resource of the second sidelink information are on a first channel, and the frequency domain resource of the second sidelink information is different from the frequency domain resource of the first sidelink information.

In other words, when the first terminal device learns through listening that the second terminal device reserves the frequency domain resource of the first channel in the second time unit, the first terminal device may determine the duration of the CPE based on the fourth duration or the second parameter. In this case, if the second terminal device also learns through listening that another terminal device reserves the frequency domain resource of the first channel in the second time unit, the second terminal device may also determine the duration of the CPE based on the fourth duration or the second parameter. In this way, the first terminal device and the second terminal device may simultaneously access the channel, to prevent different terminal devices from blocking each other.

In a possible design, the second SCI further indicates a priority of the second sidelink information.

In a possible design, the determining a duration of a CPE based on a fourth duration includes: determining that the duration of the CPE is the fourth duration; or determining that the duration of the CPE is a difference between a third duration and the fourth duration. The third duration is predefined or preconfigured.

In a possible design, the determining a duration of a CPE based on a second parameter includes: determining that the duration of the CPE is a product of the second parameter and a second duration, where the second duration is predefined or preconfigured; or determining that the duration of the CPE is a difference between a third duration and the product, where the third duration is predefined or preconfigured.

In a possible design, the second duration is 9 microseconds.

According to a third aspect, this application provides a communication apparatus. The communication apparatus has a function for implementing the first aspect or the second aspect. For example, the communication apparatus includes a corresponding module or unit for performing an operation in the first aspect or the second aspect. The function, the unit, or a means may be implemented by software, may be implemented by hardware, or may be implemented by hardware by executing corresponding software.

In a possible design, the communication apparatus includes a processing unit and a communication unit. The communication unit may be configured to receive/send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to operations in the first aspect or the second aspect.

In a possible design, the communication apparatus includes a processor. The processor may be configured to be coupled to a memory. The memory may store a necessary computer program or instructions for implementing functions in the first aspect or the second aspect. The processor may execute the computer program or the instructions stored in the memory. When the computer program or the instructions are executed, the communication apparatus is enabled to implement the method in any one of the possible designs or implementations of the first aspect or the second aspect.

In a possible design, the communication apparatus includes a processor and a memory. The memory may store a necessary computer program or necessary instructions to implement the functions in the first aspect or the second aspect. The processor may execute the computer program or the instructions stored in the memory. When the computer program or the instructions are executed, the communication apparatus is enabled to implement the method in any one of the possible designs or implementations of the first aspect or the second aspect.

In a possible design, the communication apparatus includes a processor and an interface circuit. The processor is configured to communicate with another apparatus via the interface circuit and perform the method in any one of the possible designs or implementations of the first aspect or the second aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, an embodiment of this application provides a communication system. The communication system includes at least one first terminal device, and the first terminal device is configured to perform the method according to the first aspect or the second aspect.

In a possible design, the communication system may further include at least one second terminal device. For example, the second terminal device is configured to send second SCI. The second SCI indicates a priority of second sidelink information of the second terminal device. The first terminal device is further configured to receive the second SCI.

According to a fifth aspect, this application provides a computer-readable storage medium. The computer storage medium stores computer-readable instructions; and when a computer reads and executes the computer-readable instructions, the computer is enabled to perform the method in any one of the possible designs of the first aspect or the second aspect.

According to a sixth aspect, this application provides a computer program product; and when a computer reads and executes the computer program product, the computer is enabled to perform the method in any one of the possible designs of the first aspect or the second aspect.

According to a seventh aspect, this application provides a chip system. The chip system includes a processor. The processor is coupled to a memory, and is configured to read and execute a software program stored in the memory, to implement the method in any one of the possible designs of the first aspect or the second aspect. The chip system may include a chip, or may include a chip and another discrete component.

### BRIEF DESCRIPTION OF DRAWINGS

FIG. 1A, FIG. 1B, FIG. 1C, and FIG. 1D are diagrams of architectures of a communication system to which embodiments of this application are applicable;
FIG. 2 is a diagram of several application scenarios of V2X according to an embodiment of this application;
FIG. 3 is a diagram in which a terminal device performs LBT according to an embodiment of this application;
FIG. 4 is a diagram of an interlaced resource according to an embodiment of this application;
FIG. 5 is a diagram in which a terminal device performs LBT in an SL-U technology according to an embodiment of this application;
FIG. 6 is a diagram of a scenario in which a conflict occurs according to an embodiment of this application;
FIG. 7 is a diagram of a scenario in which a conflict occurs according to an embodiment of this application;
FIG. 8 is a diagram of a CPE according to an embodiment of this application;
FIG. 9 is a diagram of a scenario in which different terminal devices block each other according to an embodiment of this application;
FIG. 10 is a schematic flowchart corresponding to a communication method according to Embodiment 1 of this application;
FIG. 11 is a diagram of determining a duration of a first CPE based on a first parameter according to an embodiment of this application;
FIG. 12 is a diagram of a plurality of channel access scenarios according to an embodiment of this application;
FIG. 13 is a schematic flowchart corresponding to a communication method according to Embodiment 2 of this application;
FIG. 14 is a schematic flowchart corresponding to a communication method according to Embodiment 3 of this application;
FIG. 15 is a schematic flowchart corresponding to a communication method according to Embodiment 4 of this application;
FIG. 16A and FIG. 16B are diagrams of scenarios in which a conflict is avoided in a method according to an embodiment of this application;
FIG. 17 is a diagram of a location of a first CPE according to an embodiment of this application;
FIG. 18 is a block diagram of a possible example of an apparatus according to an embodiment of this application; and
FIG. 19 is a diagram of a structure of a terminal device according to an embodiment of this application.

### DESCRIPTION OF EMBODIMENTS

The following describes the technical solutions in embodiments of this application with reference to the accompanying drawings in embodiments of this application.

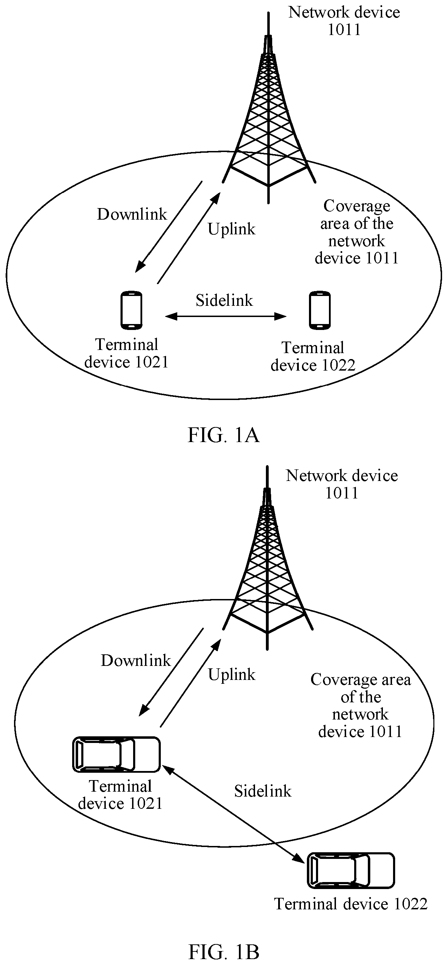

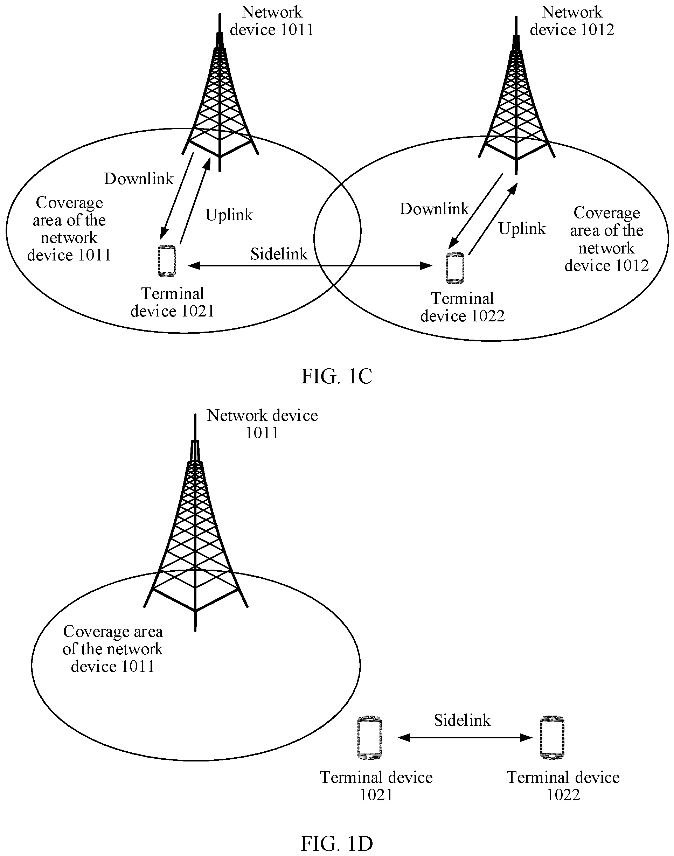

FIG. 1A to FIG. 1D are diagrams of architectures of a communication system to which embodiments of this application are applicable. As shown in FIG. 1A to FIG. 1D, the communication system may include a plurality of terminal devices (for example, a terminal device 1021 and a terminal device 1022), and optionally, may further include one or more network devices (for example, a network device 1011 and a network device 1012). In FIG. 1A, the terminal device 1021 and the terminal device 1022 are located within a coverage area of a same network device (for example, the network device 1011). In FIG. 1B, the terminal device 1021 is located within a coverage area of a network device (for example, the network device 1011), and a terminal device 1022 is covered by no network. In FIG. 1C, the terminal device 1021 and the terminal device 1022 are located within coverage areas of different network devices. For example, the terminal device 1021 is located within a coverage area of the network device 1011, and the terminal device 1022 is located within a coverage area of the network device 1012. In FIG. 1D, neither the terminal device 1021 nor the terminal device 1022 is covered by a network.

In FIG. 1A to FIG. 1D, the terminal device 1021 and the terminal device 1022 may communicate with each other through a sidelink; or the terminal device 1021 and the terminal device 1022 may communicate with each other through a PC5 interface. For example, the terminal device 1021 may send data to the terminal device 1022. In this case, the terminal device 1021 may be referred to as a transmit end terminal device or a transmit end, and the terminal device 1022 may be referred to as a receive end terminal device or a receive end. For another example, the terminal device 1022 may send data to the terminal device 1021. In this case, the terminal device 1022 may be referred to as a transmit end terminal device or a transmit end, and the terminal device 1021 may be referred to as a receive end terminal device or a receive end.

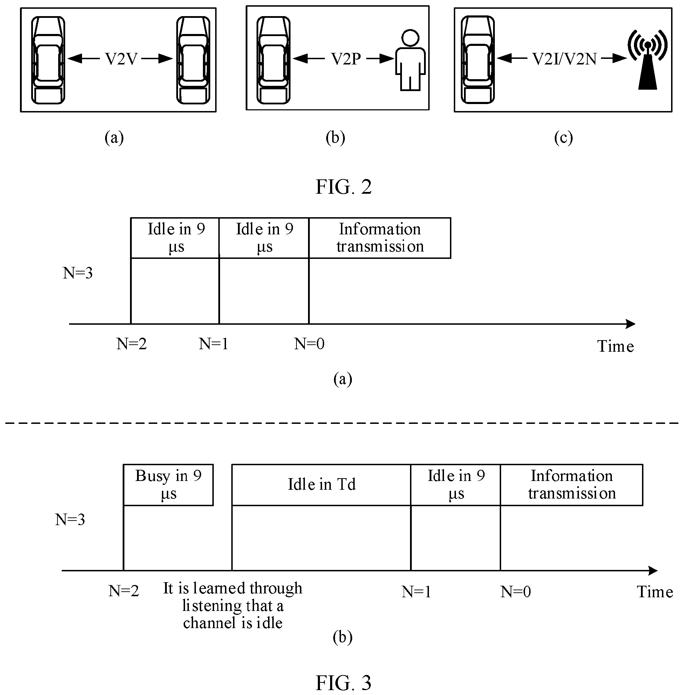

Sidelink communication between the terminal device 1021 and the terminal device 1022 may be device-to-device (device-to-device, D2D) communication, LTE-V (LTE-Vehicle) communication, or V2X communication. The V2X communication is communication between a vehicle and any object outside the world, including vehicle to vehicle (vehicle to vehicle, V2V) communication, vehicle to pedestrian (vehicle to pedestrian, V2P) communication, vehicle to infrastructure (vehicle to infrastructure, V2I) communication, vehicle to network (vehicle to network, V2N) communication, and the like. The V2V communication may be shown in (a) in FIG. 2, the V2P communication may be shown in (b) in FIG. 2, and the V2I communication or the V2N communication may be shown in (c) in FIG. 2.

It can be learned from FIG. 1A to FIG. 1D that sidelink communication between the terminal device 1021 and the terminal device 1022 may support a scenario in which there is network coverage, or may support a scenario in which there is no network coverage. When the terminal device 1021 shown in FIG. 1A to FIG. 1C is covered by a network, and the terminal device 1021 serves as a transmit end, a resource used for sidelink communication may be scheduled by a network device. For example, the network device 1011 may indicate, to the terminal device 1021, the resource used for sidelink communication. When the terminal device 1021 shown in FIG. 1D is covered by no network, or when the terminal device 1021 is covered by a network but the terminal device 1021 does not use a network device scheduling mode, and the terminal device 1021 serves as a transmit end, the terminal device 1021 may independently select the resource used for sidelink communication. In other words, the terminal device 1021 may select, from a resource pool, the resource used for sidelink communication. It should be understood that the resource in this application may be replaced with a time-frequency resource, and the time-frequency resource includes a time domain resource and/or a frequency domain resource.

The following separately describes in detail the terminal device and the network device in FIG. 1A to FIG. 1D.

### (1) Terminal device

The terminal device includes a device that provides data connectivity for a user. Specifically, the terminal device includes the device that provides data connectivity for the user, or includes the device that provides data connectivity for the user. For example, the terminal device may include a hand-held device with a wireless connection function or a processing device connected to a wireless modem. The terminal device may communicate with a core network through a radio access network (radio access network, RAN), and exchange data with the RAN or exchange voice and data with the core network. The terminal device may include user equipment (user equipment, UE), a wireless terminal device, a mobile terminal device, a device-to-device (device-to-device, D2D) communication terminal device, a vehicle-to-everything (vehicle to everything, V2X) communication terminal device, an intelligent vehicle, an invehicle infotainment system (or referred to as an internet of vehicles system) (telematics box, TBOX), a machine-to-machine/machine-type communication (machine-to-machine/machine-type communication, M2M/MTC) terminal device, and an internet of things (internet of things, IoT) terminal device. Most typically, the terminal device may be a carrier such as a vehicle, a ship, or an aircraft, a terminal-type roadside unit, or a communication module or chip built in the vehicle or roadside unit. In addition, the terminal device may further include a communication apparatus in a future communication system such as a metaverse.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

However, if the various terminal devices described above are located in a vehicle, for example, placed in the vehicle or mounted in the vehicle, the terminal devices may be all considered as vehicle-mounted terminal devices. For example, the vehicle-mounted terminal device is also referred to as an on board unit (on board unit, OBU).

In embodiments of this application, an apparatus configured to implement a function of the terminal device may be a terminal device, or may be an apparatus that can support the terminal device in implementing the function, for example, a chip system, or a combined component or device that can implement the function of the terminal device. The apparatus may be installed in the terminal device. In embodiments of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

### (2) Network device

The network device includes a radio access network device (which may also be referred to as an access network device). The network device may be a base station, an evolved base station (evolved NodeB, eNodeB), a transmission reception point (transmission reception point, TRP), a next generation base station (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like; or may be a module or unit that completes some functions of a base station, for example, may be a central unit (central unit, CU), or may be a distributed unit (distributed unit, DU). The network device may be a macro base station, may be a micro base station or an indoor base station, may be a relay node or a donor node, or the like. A network device in a V2X technology may be a roadside unit (roadside unit, RSU). The RSU may be a fixed infrastructure entity that supports a V2X application, and may exchange, through a sidelink, a message with another entity that supports the V2X application.

In embodiments of this application, the apparatus configured to implement a function of the network device may be the network device, or may be an apparatus that can support the network device in implementing the function, for example, a chip system or a combined component or device that can implement a function of the network device. The apparatus may be installed in the network device. In the technical solutions provided in embodiments of this application, an example in which the apparatus configured to implement the function of the network device is a network device is used to describe the technical solutions provided in embodiments of this application.

It may be understood that a quantity of network devices and a quantity of terminal devices included in a communication system are not limited in embodiments of this application. In addition to the network device and the terminal device, the foregoing communication system may further include another device, for example, a core network device. This is not limited in embodiments of this application. A communication system and service scenario described in embodiments of this application are intended to describe the technical solutions in embodiments of this application more clearly, and do not constitute a limitation on the technical solutions provided in embodiments of this application. A person of ordinary skill in the art may know that, with evolution of a network architecture and emergence of a new service scenario, the technical solutions provided in embodiments of this application are also applicable to a similar technical problem.

The following first describes related technical features in embodiments of this application. It should be noted that these explanations are intended to make embodiments of this application easier to understand, but should not be considered as a limitation on the protection scope claimed in this application.

### 1. Communication on an unlicensed spectrum

In a wireless communication system, spectrum resources may be classified into a licensed spectrum and an unlicensed spectrum. The licensed spectrum can be used only by a specific operator in a place, and the unlicensed spectrum can be used by any operator and is a shared spectrum resource.

The unlicensed spectrum may be used for technologies such as wireless fidelity (wireless fidelity, Wi-Fi), Bluetooth, and wireless personal area network (Zigbee). In addition, in a cellular mobile communication technology (for example, a 5G communication technology), a research is also conducted to introduce the unlicensed spectrum, for example, an NR-U technology.

Communication on the unlicensed spectrum needs to comply with some regulations, for example, listen-before-talk (listen-before-talk, LBT) based channel access and an occupied channel bandwidth (occupied channel bandwidth, OCB) requirement, to ensure access fairness between various devices running on the unlicensed spectrum.

### (1.1) LBT-based channel access

In LBT-based channel access, energy-based detection and signal class detection are usually performed. For example, energy-based detection is performed in an NR-U technology, and a detection method in which energy-based detection and signal class detection are combined is used in a Wi-Fi technology. An energy detection threshold (energy detection threshold) needs to be set for energy-based detection. When energy detected by a communication device exceeds a detection threshold, the communication device determines that a channel is busy, and the channel is not allowed to be accessed. When detected energy is less than the detection threshold and lasts over a period of time, the communication device determines that a channel is idle, and the channel is allowed to be accessed. For example, the detected energy may be a reference signal received power (reference signal received power, RSRP), and correspondingly, the detection threshold may be an RSRP threshold.

A terminal device or a network device in the NR-U technology is used as an example. The terminal device or the network device may perform the following several types (types) of LBT:
① Type 1 LBT (type 1 LBT): A terminal device or a network device that performs type 1 LBT needs to perform random backoff before accessing a channel to perform information transmission.

Specifically, the terminal device or the network device may perform information transmission after learning (listening may also be replaced by sensing), through listening in a sensing slot duration (sensing slot duration, denoted as *Tₛₗ*) of a defer duration (defer sensing, denoted as Td), that the channel idle, and a counter N becomes zero in S104. The sensing slot duration may be 9 microseconds (µs). In a possible implementation, the channel may be listened to in the following steps:
S101: Set N = N*ᵢₙᵢₜ*, where N*ᵢₙᵢₜ* is random numbers evenly distributed between 0 and CW*ₚ*, and perform S104.
S102: If N > 0, the terminal device or the network device chooses to progressively decrease the counter, and sets N = N - 1.
S103: Listen to the channel to obtain an additional sensing slot duration, and perform S104 if the channel is idle in the additional sensing slot duration, or perform S105 if the channel is not idle in the additional sensing slot duration.
S104: Stop this procedure if N = 0, or perform S102 if N is not zero.
S105: Continue to listen to the channel, until it is learned through listening that the channel is busy in one sensing slot duration in another duration Td or it is learned through listening that the channel is detected as idle in all sensing slot durations in the another duration Td.
S106: Perform S 104 if it is detected that the channel is idle in all the sensing slot durations in the another duration Td, or perform S105 if it is detected that the channel is not idle in all the sensing slot durations in the another duration Td.

Based on S101 to S106, FIG. 3 shows examples of two cases.

In (a) in FIG. 3, the terminal device or the network device sets N = N*ᵢₙᵢₜ* = 3. In this case, N>0. Therefore, N=3-1=2 may be set, and the channel is listened to. When it is learned through listening that the channel is idle in the sensing slot duration (9 µs), N=2-1=1 is set, and the channel continues to be listened to. When it is learned through listening that the channel is idle in the sensing slot duration (9 µs), N=1-1=0 is set, and information transmission may be performed.

In (b) in FIG. 3, the terminal device or the network device sets N = N*ᵢₙᵢₜ* = 3. In this case, N>0. Therefore, N=3-1=2 may be set, and the channel is listened to. When it is learned through listening that the channel is busy in the sensing slot duration (9 µs), the channel may continue to be listened to, until it is sensed that the channel is detected as idle in all the sensing slot durations in the another duration Td, N=2-1=1 is set, and the channel continues to be listened to. When it is learned through listening that the channel is idle in the sensing slot duration (9 µs), N=1-1=0 is set, and information transmission may be performed.

Td includes a duration *T_{f}* = 16 µs, and is followed by m*ₚ* consecutive sensing slot durations. CW*ₚ* is a contention window, CW_{min, *p*} ≤ CW*ₚ* ≤ CW_{max, *p*}, and the terminal device or the network device may select CW_{min, *p*} and CW_{max, *p*} before S101 in the foregoing program. After the terminal device or the network device accesses the channel, a channel occupancy time (namely, a time for performing information transmission on the channel) does not exceed *T_{m cot, p}.* For downlink transmission, m*ₚ*, CW_{min, *p*}, CW_{max, *p*}, and *T_{m cot, p}* are related to a channel access priority class (channel access priority class, CAPC) of the network device, as shown in Table 1. For uplink transmission, m*ₚ*, CW_{min, *p*}, CW_{max,} *ₚ,* and *T_{m cot, p}* are related to a channel access priority class (channel access priority class, CAPC) of the terminal device, as shown in Table 2.

**Table 1: Parameter related to a channel access priority class (for downlink transmission)**

| Channel access priority class (p) | m*ₚ* | CW_{min, *p*} | CW_{max, *p*} | *T_{m cot, p}* | Allowed values of CW*ₚ* |
|---|---|---|---|---|---|
| 1 | 1 | 3 | 7 | 2 milliseconds (ms) | {3, 7} |
| 2 | 1 | 7 | 15 | 3 ms | {7, 15} |
| 3 | 3 | 15 | 63 | 8 *ms* or 10*ms* | {15, 31, 63} |
| 4 | 7 | 15 | 1023 | 8 *ms* or 10*ms* | {15, 31, 63, 127, 255, 511, 1023} |

**Table 2: Parameter related to a channel access priority class (for uplink transmission)**

| Channel access priority class (p) | m*ₚ* | CW_{min, *p*} | CW_{max, *p*} | *T_{m cot, p}* | Allowed values of CW*ₚ* |
|---|---|---|---|---|---|
| 1 | 2 | 3 | 7 | 2 ms | {3, 7} |
| 2 | 2 | 7 | 15 | *4ms* | {7, 15} |
| 3 | 3 | 15 | 1023 | 6 *ms* or 10*ms* | {15, 31, 63, 127, 255, 511, 1023} |
| 4 | 7 | 15 | 1023 | 6ms or 10 ms | {15, 31, 63, 127, 255, 511, 1023} |

In addition, the terminal device or the network device may further maintain the value of the contention window CW*ₚ*, and adjust the value of CW*ₚ* in the following steps before S101:
S100a: Set CW*ₚ* = CW_{min, *p*} for each priority class p ∈ {1,2,3,4}.
S100b: In hybrid automatic repeat request (hybrid automatic repeat request, HARQ) feedback information (the HARQ feedback information includes acknowledgment (acknowledgment, ACK)/negative acknowledgment (negative acknowledgment, NACK)) corresponding to data sent by the terminal device or the network device in a reference subframe k, if at least 80% is determined as NACK, a value of CW*ₚ* corresponding to each priority class *p* ∈ {1,2,3,4} is increased to a next larger allowed value, and ACK/NACK is still determined in S100b; or perform S100a if less than 80% is determined as NACK. The reference subframe k is a start subframe of latest transmission performed by the terminal device or the network device on the channel.

② Type 2A LBT (type 2A LBT): A terminal device or a network device that performs type 2A LBT can access the channel and send data, after sensing that the channel is idle for at least 25 µs.
③ Type 2B LBT (type 2B LBT): A terminal device or a network device that performs type 2B LBT can access the channel and send data, after sensing that the channel is idle for at least 16 µs.
④ Type 2C LBT (type 2C LBT): A terminal device or a network device that performs type 2C LBT does not need to sense the channel, and may directly access the channel and send data, after a switching interval of up to 16 µs within the COT.

In embodiments of this application, the following provides descriptions by using type 1 LBT as an example. In addition, the foregoing types of LBT may be used for channel access on an unlicensed frequency band. However, in embodiments of this application, channel access on the unlicensed frequency band is allowed to be performed in another channel access manner allowed by laws and regulations of another country/region.

### (1.2) OCB requirement and interlaced resource

According to laws and regulations on an unlicensed spectrum in a country and a region, a channel can be occupied only when a minimum OCB requirement is met. The minimum OCB requirement may mean that an occupied channel bandwidth is at least 80% of a nominal channel bandwidth, and the nominal channel bandwidth is a bandwidth allocated to a single channel. For example, the channel bandwidth is 20 MHz. In other words, the 20 MHz channel may be preempted only when at least a bandwidth of 16 MHz is occupied.

To meet the OCB requirement, a plurality of interlaced (interlace) resources are defined in a protocol. The interlaced resource m includes common resource blocks (common resource block, CRB) {m, M+m, 2M+m, 3M+m, ...}, M is a quantity of interlaced resources, m ∈ {0, 1, ..., M-1}, and m is a number or an index of the interlaced resource. Optionally, a value of M is related to a subcarrier spacing (subcarrier spacing, SCS). For example, in the 20 MHz bandwidth, when the subcarrier spacing is 15 kilohertz (kHz), the value of M may be 10. For another example, in the 20 MHz bandwidth, when the subcarrier spacing is 30 kHz, the value of M may be 5. In this application, an interlaced resource unit may be a resource block (resource block, RB), or may be another frequency domain resource unit. For ease of description, the CRB may be understood as an RB.

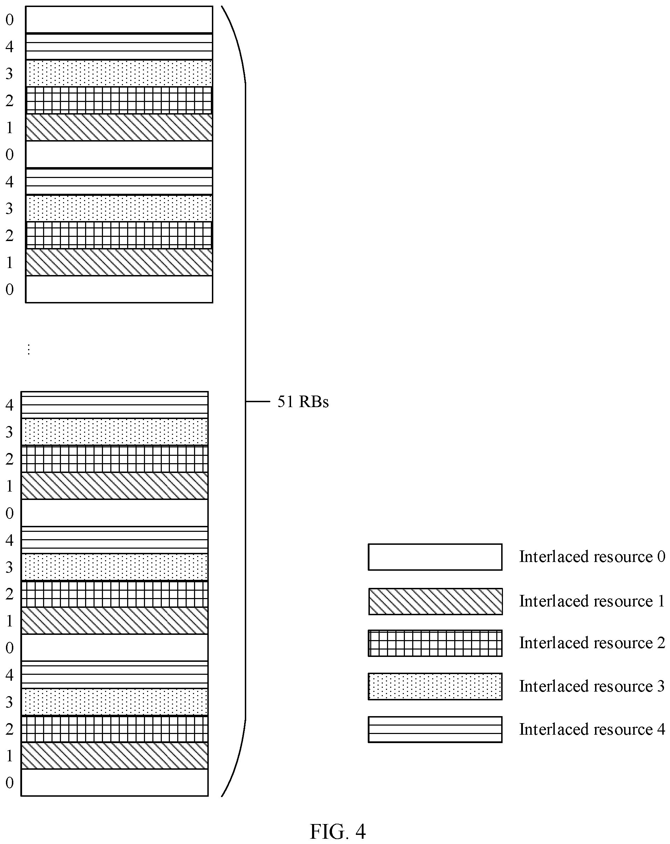

As shown in FIG. 4, in the 20 MHz bandwidth, there are a total of 51 RBs in a case of the 30 kHz subcarrier spacing. There are a total of five interlaced resources in the 51 RBs. An interlaced resource 0 includes 11 white RBs shown in FIG. 4, and an interlaced resource 1, an interlaced resource 2, an interlaced resource 3, and an interlaced resource 4 each include 10 RBs with different shadows shown in FIG. 4.

The 20 MHz bandwidth and the 30 kHz subcarrier spacing are used as an example. If a subchannel (subchannel) includes 10 consecutive RBs, there are five subchannels (the remaining one RB is idle). If sending performed by the terminal device on one subchannel occupies a bandwidth of about 4 MHz, the OCB requirement "the occupied channel bandwidth is at least 80% of the nominal channel bandwidth" is not met. If sending is performed on an interlaced resource, FIG. 4 is still used as an example, and if sending is performed on the interlaced resource 1, the occupied channel bandwidth is about 20 MHz, namely, 100% of the nominal channel bandwidth; or if sending is performed on the interlaced resource 2, the occupied channel bandwidth is about 18 MHz, namely, about 46/51≈90% of the bandwidth, and the OCB requirement may be met.

### 2. Sidelink communication

In sidelink communication, a transmit end terminal device may send sidelink information to a receive end terminal device. The sidelink information may also be referred to as sidelink information, and a resource used for sidelink communication or a resource used to carry the sidelink information may be referred to as a sidelink resource.

As described above, a network device may allocate a resource to a terminal device, so that the terminal device may perform sidelink communication on the resource allocated by the network device. In this case, a resource used by the terminal device may be a resource (namely, a licensed resource) on a licensed spectrum. In other words, the terminal device performs sidelink communication on the licensed spectrum. Alternatively, the terminal device may autonomously select a resource from a resource pool, and perform sidelink communication on the selected resource. In this case, a resource used by the terminal device may be a resource (namely, an unlicensed resource) on an unlicensed spectrum. In other words, the terminal device performs sidelink communication on the unlicensed spectrum. A scenario in which the terminal device performs sidelink communication on the unlicensed spectrum may be referred to as SL-U.

### (2.1) Sidelink information

In embodiments of this application, information transmitted on a sidelink may be referred to as sidelink information. For example, the sidelink information may include sidelink control information (sidelink control information, SCI) and/or sidelink data. It may be understood that the sidelink information may alternatively include other possible information. In embodiments of this application, an example in which the sidelink information includes SCI and/or sidelink data is used for description.

The SCI may be carried on a physical sidelink control channel (physical sidelink control channel, PSCCH) and/or a physical sidelink shared channel (physical sidelink shared channel, PSSCH), and the sidelink data may be carried on the PSSCH. SCI carried on the PSCCH may be referred to as first-level SCI, and SCI carried on the PSSCH may be referred to as second-level SCI.

Further, a unit of a scheduling granularity of the PSCCH or the PSSCH in time domain is one time unit, and a unit in frequency domain is one frequency domain unit or a plurality of consecutive frequency domain units. In other words, a resource used by the terminal device to perform sidelink communication needs to be an integer multiple of a time unit in time domain, and needs to be an integer multiple of a frequency domain unit in frequency domain. One time unit may be one slot (slot) or one mini-slot (mini-slot), and is not specifically limited. In embodiments of this application, an example in which one time unit is one slot is used for description. The frequency domain unit may be one RB, a plurality of RBs, one subchannel, a plurality of subchannels, one interlaced resource, or a plurality of interlaced resources, and is not specifically limited. In embodiments of this application, an example in which the frequency domain unit is one subchannel is used for description.

Herein, a relationship among the channel, the subchannel, and the interlaced resource is explained and described.

The channel may be a carrier that needs to be accessed by the terminal device on an unlicensed spectrum in a channel access process or a part of the carrier. For example, a channel bandwidth is 20 MHz. To avoid interference between different channels, it is specified in a protocol that the terminal device cannot send data in the entire 20 MHz bandwidth, but reserves some frequency band resources as a guard band (guard band). In other words, the terminal device sends data only on some frequency domain resources other than the guard band. The some available frequency domain resources are referred to as a resource block set (namely, an RB set). Therefore, one channel may be one resource block set (RB set). When a location and a size of the guard band are determined, a start RB location, an end RB location, and a quantity of RBs in the RB set are also determined accordingly. In addition, when the terminal device performs an LBT operation on a plurality of consecutive 20 MHz channels and successfully accesses the channel, a guard band between two RB sets may be used to transmit data, to improve resource utilization.

The channel may include one or more subchannels. On the unlicensed spectrum, after accessing the channel, the terminal device may perform information transmission on some or all subchannels included on the channel. Alternatively, the channel may include one or more interlaced resources. In the unlicensed spectrum, after accessing the channel, the terminal device may perform information transmission on some or all of the interlaced resources included on the channel.

For example, for an interlaced transmission mode, if the frequency domain unit is one subchannel, one subchannel may include one interlaced resource, and one subchannel includes a plurality of inconsecutive RBs. For a non-interlaced transmission mode, if the frequency domain unit is one subchannel, one subchannel may include a plurality of consecutive RBs.

### (2.2) Resource selection and reservation

As described above, a terminal device may autonomously select a resource from a resource pool. For example, the terminal device may select and reserve the resource from the resource pool, and then send sidelink information on the reserved resource after completing channel access.

In an example, after selecting the resource from the resource pool, the terminal device may send SCI. The SCI indicates a resource (including a time domain resource and a frequency domain resource) of the sidelink information sent by the terminal device. After receiving the SCI of the terminal device, another terminal device may learn of the resource reserved by the terminal device, so that when selecting the resource, the another terminal device may exclude the resource reserved by the terminal device. For a specific implementation of selecting the resource by the terminal device from the resource pool, refer to the conventional technology.

The resource pool (resource pool) may also be referred to as an SL resource pool. Optionally, the resource pool may be preconfigured. For example, in a network coverage area, a network device sends resource pool information to a terminal device in a current cell based on system information block (system information block, SIB), cell-specific (cell-specific) radio resource control (radio resource control, RRC) signaling, or user-specific (UE-specific) RRC signaling. The resource pool information indicates the resource pool. Alternatively, the resource pool may be predefined.

The resource pool may include one or more time units in time domain. When the resource pool includes a plurality of time units in time domain, the plurality of time units may be consecutive or discrete. The resource pool may include one or more frequency domain units in frequency domain. In addition, the resource pool may include at least one channel. For example, if the resource pool includes one channel, and a channel bandwidth is 20 MHz, a bandwidth of the resource pool is 20 MHz. For another example, if the resource pool may include two channels, and a channel bandwidth is 20 MHz, a bandwidth of the resource pool is 40 MHz. In other words, the resource pool may include at least one resource block set (namely, an RB set). For a meaning of the RB set, refer to the foregoing descriptions.

### 3. Automatic gain control

For sidelink communication, transmit ends and receive ends that perform sidelink communication in different slots may be different. Therefore, for a receive end, transmit ends of sidelink information received by the receive end in different slots may be different. In other words, transmit ends of sidelink information received by the receive end in different slots may be at different geographical locations. Therefore, a near-far effect exists, and received signal strength of the receive end in different slots may change in a wide dynamic range and cannot be predicted. If received signal strength of a sidelink does not fall within a proper strength range of the receive end, the receive end may be unable to accurately decode the sidelink information.

To control the received signal strength of the receive end to fall within a proper range, automatic gain control (automatic gain control, AGC), also referred to as AGC adjustment, is introduced to sidelink communication. To be specific, the receive end adjusts the received signal strength to an expected power through an analog or digital gain, to satisfy a signal-to-noise ratio (signal-to-noise ratio, SNR) required for correct decoding. Specifically, when the received signal strength is weak, an AGC algorithm increases a gain level of a receiver, so that an SNR of a received signal reaches an acceptable range. If the received signal strength is very strong, the AGC algorithm decreases the gain level of the receiver, to avoid a decrease that is in the SNR and that is caused by signal clipping and non-linear degradation.

In a possible implementation, the transmit end may copy all information of a 2^{nd} symbol in a slot to a 1^{st} symbol in the slot. For ease of description, the information copied to the 1^{st} symbol is referred to as AGC information. To reduce overheads caused by performing AGC in a slot, transmit powers of a transmit end on all symbols in the slot are the same. Therefore, the receive end only needs to perform AGC for one time on a 1st symbol in the slot, to ensure that an AGC result is consistent for the entire slot. In other words, the receive end may perform AGC processing on the AGC information on the 1^{st} symbol in the slot, to obtain an AGC result, and then decode, based on the AGC result, sidelink information received on remaining symbols in the slot.

### 4. Channel preemption signal

The channel preemption signal is used by a terminal device to preempt a channel before actual information transmission. In other words, a receive end may receive but does not need to parse the channel preemption signal. For example, in NR-U, before sending uplink information, the terminal device may first send the channel preemption signal to preempt a channel. For another example, in SL-U, before sending sidelink information, the terminal device may first send the channel preemption signal to preempt a channel.

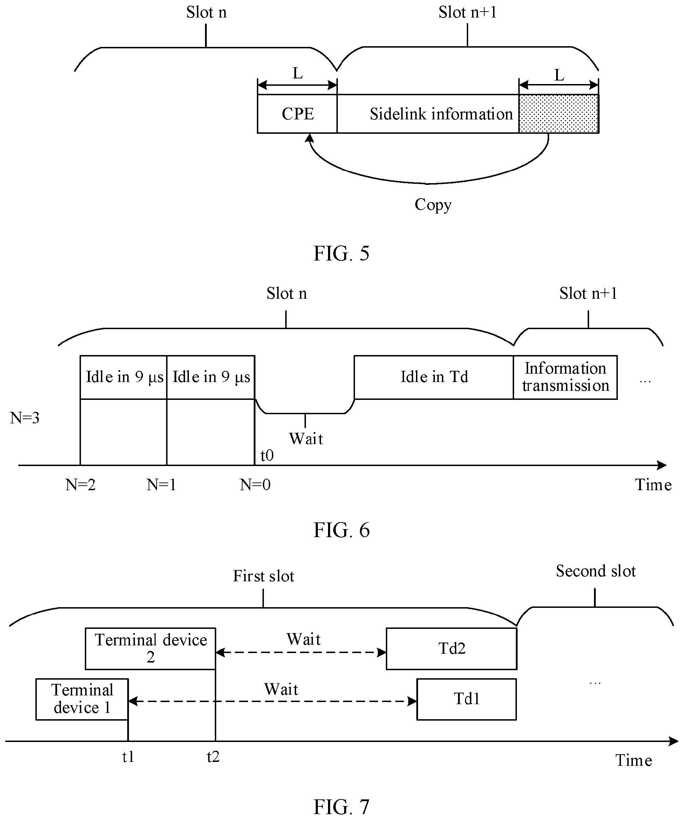

In an example, the channel preemption signal may be a CPE. For example, in the foregoing SL-U, a part of the sidelink information may be copied to obtain a CPE. The SL-U is used as an example. As shown in FIG. 5, it is assumed that the CPE is in a slot n, the sidelink information is in a slot n+1, and a duration of the CPE is L. In this case, the terminal device may copy, to a time domain resource whose length is L in the slot n, sidelink information carried on a time domain resource whose length is L in the slot n+1, and the copied information is the CPE. In embodiments of this application, a specific location of the time domain resource whose length is L in the slot n+1 is not limited. For example, an end location of the time domain resource whose length is L in the slot n+1 may be an end location of a second slot.

The duration of the CPE may be a duration of a time domain resource occupied by the CPE, or a duration of a time domain resource required for transmitting the CPE.

It may be understood that the channel preemption signal may alternatively be replaced with another possible name. This is not limited in embodiments of this application.

It may be understood that, in the SL-U, after a channel access process ends and before the sidelink information is sent, a communication device may send the CPE to occupy a channel.

### 5. CPE determining manner in NR-U

In the NR-U, a terminal device (or a network device) may randomly select one duration from a plurality of durations as a duration of a CPE, and send the CPE to preempt a channel. The plurality of durations may include, for example, a duration 0, a duration 1, ..., and a duration 6. Table 3 shows examples of the plurality of durations. A unit of the duration in Table 3 is second (s). T*_{symbol}* in Table 3 indicates a duration of one symbol corresponding to a subcarrier spacing of 15 kHz. The plurality of durations may be predefined in a protocol or preconfigured, and are not specifically limited.

**Table 3: Examples of a plurality of durations**

| Duration index (i) | Duration (Δ*ᵢ*) (a unit may be s) |
|---|---|
| 0 | 16 • 10⁻⁶ |
| 1 | 25 • 10⁻⁶ |
| 2 | 34• 10⁻⁶ |
| 3 | 43 • 10⁻⁶ |
| 4 | 52 • 10⁻⁶ |
| 5 | 61 • 10⁻⁶ |
| 6 | T*_{symbol}* |

Based on Table 3, the terminal device is used as an example. If a duration randomly selected by the terminal device is the duration 1, before sending uplink information to the network device, the terminal device may first send a CPE whose length is 25 • 10⁻⁶s, to preempt a channel.

### 6. Priority of sidelink information

For example, the sidelink information is sidelink data. The priority of the sidelink information may be a priority of a PSSCH used to carry the sidelink information, or may be a service priority of the sidelink information.

For example, a priority class of the sidelink information may include 1, 2, 3, ..., and 8. A smaller priority class of the sidelink information indicates a higher priority of the sidelink information. For example, a priority corresponding to the priority class 1 of the sidelink information is higher than a priority corresponding to the priority class 2 of the sidelink information, the priority corresponding to the priority class 2 of the sidelink information is higher than a priority corresponding to the priority class 3 of the sidelink information, and so on.

It can be learned from the descriptions of the foregoing related technical features that before communication on an unlicensed spectrum, a terminal device needs to first complete channel access (namely, LBT). In some possible communication scenarios (for example, SL-U) of the unlicensed spectrum, a resource used by the terminal device needs to be an integer multiple of a slot in time domain. For these communication scenarios, if the terminal device completes LBT in a slot n, the terminal device cannot immediately perform information transmission, but needs to wait for a slot n+1 to perform information transmission. In a possible implementation, as shown in FIG. 6, the terminal device rolls back N to 0 at a time point t0 of the slot n. In this case, the terminal device needs to wait, and can perform information transmission in the slot n+1 only after it is learned through listening that the channel is idle within a defer duration (namely, Td) before the slot n+1.

For LBT, when a subcarrier spacing is 30 kHz, a duration of one slot is 0.5 ms. If a channel is always idle in one slot, a maximum of N = floor(0.5 ms - 16 µs/9 µs) = 53 rollbacks may be performed in one slot. The SL-U is used as an example. When CAPC=1, a maximum value of CW*ₚ* is 7. When CAPC=2, a maximum value of CWₚ is 15. To be specific, both a terminal device corresponding to CAPC=1 (a maximum value of N is 7) and a terminal device corresponding to CAPC=2 (the maximum value of N is 15) may roll back N to 0 in one slot. In other words, in a same slot, a plurality of terminal devices may learn through listening that a channel is idle, further complete LBT, and perform information transmission in a next slot. Consequently, the plurality of terminal devices conflict with each other, and a communication abnormality occurs.

The following uses the SL-U as an example to describe two scenarios in which a conflict may occur: Scenario 1 and Scenario 2.

### (1) Scenario 1

In Scenario 1, both a terminal device 1 and a terminal device 2 are terminal devices that reserve no resource, and the terminal device 1 and the terminal device 2 may conflict with each other.

As shown in FIG. 7, a channel is idle in a first slot. The terminal device 1 rolls back N to 0 at a time point t1 in the first slot, the terminal device 1 learns through listening that the channel is idle within a defer duration (namely, Td1) before a second slot, and the terminal device 1 determines that a resource in the second slot is available; and the terminal device 2 rolls back N to 0 at a time point t2 in the first slot, the terminal device 2 learns through listening that the channel is idle within a defer duration (namely, Td2) before the second slot, and the terminal device 2 determines that the resource in the second slot is available.

For example, the terminal device 1 selects an interlaced resource 0 and an interlaced resource 3 on a first channel (or an RB set included on the first channel) in the second slot, and the terminal device 2 also selects the interlaced resource 0 and the interlaced resource 3 on the first channel in the second slot. Therefore, the terminal device 1 sends first sidelink information on the interlaced resource 0 and the interlaced resource 3 in the second slot, and the terminal device 2 sends second sidelink information on the interlaced resource 0 and the interlaced resource 3 in the second slot. Consequently, the terminal device 1 and the terminal device 2 conflict with each other, and neither the terminal device 1 nor the terminal device 2 can successfully send sidelink information in the second slot.

For another example, the terminal device 1 selects all frequency domain resources (for example, all interlaced resources) of a first channel in the second slot, and the terminal device 2 selects some frequency domain resources (for example, some interlaced resources or some RB resources) of the first channel in the second slot. Therefore, the terminal device 1 sends first sidelink information on all the frequency domain resources in the second slot, and the terminal device 2 sends second sidelink information on the some frequency domain resources in the second slot. Consequently, the terminal device 1 and the terminal device 2 conflict with each other, and neither the terminal device 1 nor the terminal device 2 can successfully send sidelink information in the second slot.

### (2) Scenario 2

In Scenario 2, both a terminal device 1 and a terminal device 2 are terminal devices that have reserved resources, a terminal device 3 is a terminal device that has not reserved a resource, and the terminal device 3 may conflict with the terminal device 1 and the terminal device 2.

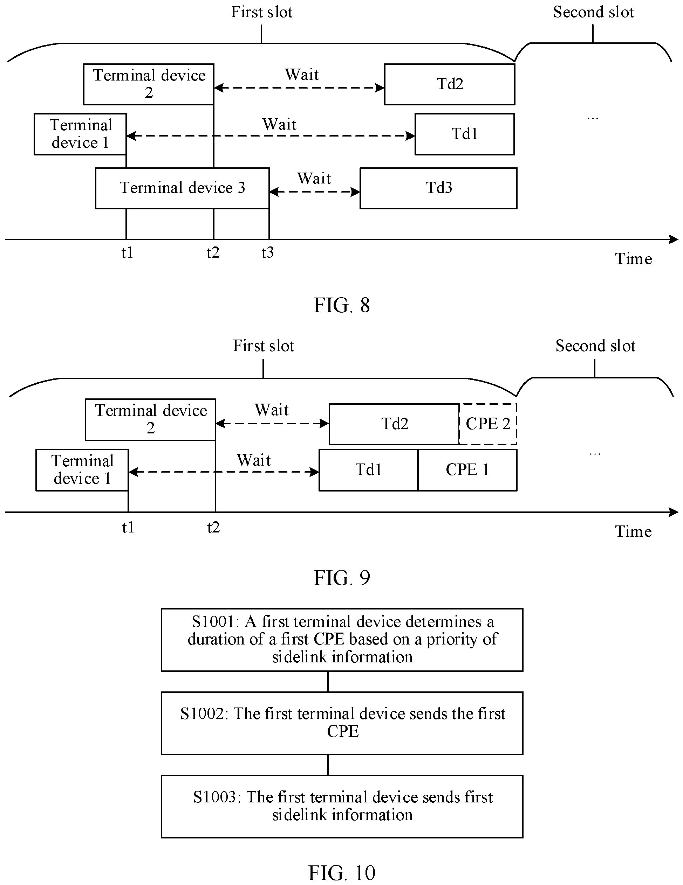

As shown in FIG. 8, the terminal device 1 sends SCI before a first slot to reserve a resource 1 in a second slot, and the terminal device 2 also sends SCI before the first slot to reserve a resource 2 in the second slot. A channel is idle in the first slot. The terminal device 1 rolls back N to 0 at a time point t1 in the first slot, the terminal device 1 learns through listening that the channel is idle within a defer duration (namely, Td1) before the second slot, and the terminal device 1 sends sidelink information on the resource 1 reserved in the second slot; and the terminal device 2 rolls back N to 0 at a time point t2 in the first slot, the terminal device 2 learns through listening that the channel is idle within a defer duration (namely, Td2) before the second slot, and the terminal device 2 sends sidelink information on the resource 2 reserved in the second slot.

It is assumed that the terminal device 3 has a transmission requirement, rolls back N to 0 at a time point t3 in the first slot, the terminal device 3 learns through listening that the channel is idle within a defer duration (namely, Td3) before the second slot, and the terminal device 3 determines that the resource in the second slot is available. For example, the terminal device 3 does not learn through listening of the SCI sent by the terminal device 1 and the terminal device 2 or the terminal device 3 learns through listening that the SCI is incorrectly decoded. Therefore, the terminal device 3 does not learn that the resource 1 and the resource 2 in the second slot are reserved by another terminal device. If the terminal device 3 also selects the resource 1 and the resource 2 in the second slot to send the sidelink information, the terminal device 3 conflicts with the terminal device 1 and the terminal device 2. Consequently, none of the terminal device 1, the terminal device 2, and the terminal device 3 can successfully send the sidelink information in the second slot.

To resolve a problem that different terminal devices conflict with each other, in a possible implementation, a manner of determining a CPE in NR-U is introduced into SL-U. To be specific, in the SL-U, the terminal device may randomly select one duration from a plurality of durations as a duration of the CPE, and send the CPE. However, because the duration of the CPE is randomly selected, different terminal devices may block each other, for example, as shown in a scenario 3.

### (3) Scenario 3

In the scenario 3, both a terminal device 1 and a terminal device 2 are terminal devices that have reserved resources (as described in Scenario 2). In other words, the terminal device 1 and the terminal device 2 may simultaneously access a first channel in a second slot, and send sidelink information on respectively reserved frequency domain resources. In this case, no conflict occurs. However, after a manner of determining a CPE in NR-U is introduced to SL-U, the terminal device 1 and the terminal device 2 also randomly select a duration of the CPE. If durations that are of CPEs and that are selected by the terminal device 1 and the terminal device 2 are different, the terminal device 1 and the terminal device 2 may block each other.

As shown in FIG. 9, it is assumed that the terminal device 1 randomly selects a duration 5 from a plurality of durations as a duration of a CPE 1, and the terminal device 2 randomly selects a duration 2 from the plurality of durations as a duration of a CPE 2. The duration of the CPE 1 is different from the duration of the CPE 2, and the duration of the CPE 2 is less than the duration of the CPE 1. Therefore, before the terminal device 2 sends the CPE 2, the terminal device 2 learns through listening that the terminal device 1 sends the CPE 1 (that is, the terminal device 2 learns, through listening in Td2, that a channel is busy). Therefore, the terminal device 2 may determine that channel access fails, and cannot send sidelink information in the second slot. In other words, the terminal device 1 preempts the channel by sending the CPE 1 in advance, and the terminal device 2 is blocked.

Therefore, after the manner of determining the CPE in the NR-U is introduced to the SL-U, a probability that different terminal devices conflict with each other can be reduced to some extent. However, the terminal device randomly selects one duration from the plurality of durations as the duration of the CPE. Therefore, when a priority of sidelink information to be sent by the terminal device 2 is higher than a priority of sidelink information to be sent by the terminal device 1, if the duration of the CPE 1 selected by the terminal device 1 is greater than the duration of the CPE 2 selected by the terminal device 2, sidelink information with a low priority is sent on a reserved resource, but sidelink information with a high priority cannot be sent on a reserved resource. This wastes resources, and transmission of a high-priority service cannot be guaranteed.

Based on this, in embodiments of this application, an implementation of performing sidelink communication by a terminal device on an unlicensed spectrum is studied. For example, embodiments of this application provide some communication methods, to resolve a problem that a communication abnormality is caused by a conflict among a plurality of terminal devices, or a problem that a resource waste is caused by mutual blocking among a plurality of terminal devices.

The following describes, with reference to Embodiment 1 to Embodiment 5, in detail the communication method provided in embodiments of this application.

### Embodiment 1

FIG. 10 is a schematic flowchart corresponding to a communication method according to Embodiment 1 of this application. As shown in FIG. 10, the method includes the following steps.

S1001: A first terminal device determines a duration of a first CPE based on a priority of sidelink information.

Herein, the priority of the sidelink information may be a priority of first sidelink information to be sent by the first terminal device. A time domain resource of the first sidelink information is in a second time unit, and a frequency domain resource of the first sidelink information is on a first channel.

There may be a plurality of implementations in which the first terminal device determines the duration of the CPE based on the priority of the sidelink information. The following describes two possible implementations with reference to Implementation 1 and Implementation 2.

### (1) Implementation 1

In Implementation 1, there may be a correspondence between a priority and a duration, one priority may correspond to one or more durations, and different priorities correspond to different durations.

Optionally, the correspondence between a priority and a duration may be predefined; or the correspondence between a priority and a duration may be preconfigured. This is not specifically limited.

"Preconfigured" may be that the correspondence is set in a terminal device before the terminal device is delivered, or may be that the correspondence is configured by another device (for example, another terminal device or a network device) for the terminal device when the terminal device is connected to a network. For understandings of "preconfigured" described in other parts of embodiments of this application, refer to the descriptions herein.

Optionally, the priority of the sidelink information corresponds to one duration, and the first terminal device may determine the duration of the first CPE based on the duration corresponding to the priority of the sidelink information.

Alternatively, the priority of the sidelink information corresponds to a plurality of durations, and the plurality of durations include a first duration. In this case, the first terminal device selects the first duration from the plurality of durations corresponding to the priority of the sidelink information, and then determines the duration of the first CPE based on the first duration.

**(1.1)** In an example, a higher priority corresponds to a longer duration, and a lower priority corresponds to a shorter duration. Based on this example, the duration determined by the first terminal device based on the priority of the sidelink information is the duration of the first CPE.

Based on this example, in a possible implementation, Table 4A and Table 4B show examples of correspondences between a priority and a duration. In Table 4A, one priority corresponds to one duration. In Table 4B, one priority corresponds to two durations.

**Table 4A: Example of a correspondence between a priority and a duration**

| Priority | Duration (a unit may be s) |
|---|---|
| 1 | 72 • 10⁻⁶ |
| 2 | 63 • 10⁻⁶ |
| 3 | 54 • 10⁻⁶ |
| 4 | 45 • 10⁻⁶ |
| 5 | 36 • 10⁻⁶ |
| 6 | 27 • 10⁻⁶ |
| 7 | 18 • 10⁻⁶ |
| 8 | 9 • 10⁻⁶ |

**Table 4B: Example of a correspondence between a priority and a duration**

| Priority | Duration (a unit may be s) |
|---|---|
| 1 | 144 • 10⁻⁶ and 135 • 10⁻⁶ |
| 2 | 126 • 10⁻⁶ and 117 • 10⁻⁶ |
| 3 | 108 • 10⁻⁶ and 99 • 10⁻⁶ |
| 4 | 90 • 10⁻⁶ and 81 • 10⁻⁶ |
| 5 | 72 • 10⁻⁶ and 63 • 10⁻⁶ |
| 6 | 54 • 10⁻⁶ and 45 • 10⁻⁶ |
| 7 | 36 • 10⁻⁶ and 27 • 10⁻⁶ |
| 8 | 18 • 10⁻⁶ and 9 • 10⁻⁶ |

It may be understood that, in Table 4A and Table 4B, an example in which each priority corresponds to a same quantity of durations is used for description. In another possible embodiment, different priorities may alternatively correspond to different quantities of durations.

Based on this example, in another possible implementation, durations corresponding to different priorities may still be the durations in Table 3. In this case, Table 4C and Table 4D show examples of correspondences between a priority and a duration. In Table 4C, one priority corresponds to one duration. In Table 4D, one priority corresponds to one duration index and one duration.

**Table 4C: Example of a correspondence between a priority and a duration**

| Priority | Duration (Δ*ᵢ*) (a unit may be s) |
|---|---|
| 1 | T*_{symbol}* |
| 2 | T*_{symbol}* |
| 3 | 61 • 10⁻⁶ |
| 4 | 52 • 10⁻⁶ |
| 5 | 43 • 10⁻⁶ |
| 6 | 34• 10⁻⁶ |
| 7 | 25 • 10⁻⁶ |
| 8 | 16 • 10⁻⁶ |

**Table 4D: Example of a correspondence between a priority and a duration**

| Priority | Duration index (i) | Duration (Δ*ᵢ*) (a unit may be s) |
|---|---|---|
| 1 | 6 | T*_{symbol}* |
| 2 | 6 | T*_{symbol}* |
| 3 | 5 | 61 • 10⁻⁶ |
| 4 | 4 | 52 • 10⁻⁶ |
| 5 | 3 | 43 • 10⁻⁶ |
| 6 | 2 | 34• 10⁻⁶ |
| 7 | 1 | 25 • 10⁻⁶ |
| 8 | 0 | 16 • 10⁻⁶ |

It may be understood that, because there are a total of seven duration indexes in Table 3, when durations corresponding to different priorities are still the durations in Table 3, the priority 1 and the priority 2 may correspond to a same duration.

**(1.2)** In another example, a higher priority corresponds to a shorter duration, and a lower priority corresponds to a longer duration. Based on this example, the first terminal device determines the duration of the first CPE based on the duration determined based on the priority of the sidelink information. For example, the first terminal device determines the duration of the first CPE based on the first duration. Details are as follows:
The first terminal device determines the duration of the first CPE based on the first duration and a third duration.

For example, the duration of the first CPE is equal to a difference between the third duration and the first duration.

Optionally, the third duration is predefined in a protocol, or the third duration is preconfigured. For example, the third duration may be T*_{symbol}.*

Optionally, the third duration is a time interval between a first preset location and a second preset location.

The first preset location and the second preset location are predefined in a protocol, or are preconfigured. For example, the first preset location is a starting position of a last symbol in a first slot, and the second preset location is an end location of the last symbol in the first slot.

Based on this example, in a possible implementation, Table 4E and Table 4F show examples of correspondences between a priority and a duration.

**Table 4E: Example of a correspondence between a priority and a duration**

| Priority | Duration (a unit may be s) |
|---|---|
| 1 | 9 • 10⁻⁶ |
| 2 | 18 • 10⁻⁶ |
| 3 | 27 • 10⁻⁶ |
| 4 | 36 • 10⁻⁶ |
| 5 | 45 • 10⁻⁶ |
| 6 | 54 • 10⁻⁶ |
| 7 | 63 • 10⁻⁶ |
| 8 | 72 • 10⁻⁶ |

**Table 4F: Example of a correspondence between a priority and a duration**

| Priority | Duration (a unit may be s) |
|---|---|
| 1 | 18 • 10⁻⁶ and 9 • 10⁻⁶ |
| 2 | 36 • 10⁻⁶ and 27 • 10⁻⁶ |
| 3 | 54 • 10⁻⁶ and 45 • 10⁻⁶ |
| 4 | 72 • 10⁻⁶ and 63 • 10⁻⁶ |
| 5 | 90 • 10⁻⁶ and 81 • 10⁻⁶ |
| 6 | 108 • 10⁻⁶ and 99 • 10⁻⁶ |
| 7 | 126 • 10⁻⁶ and 117 • 10⁻⁶ |
| 8 | 144 • 10⁻⁶ and 135 • 10⁻⁶ |

Based on this example, in another possible implementation, durations corresponding to different priorities may still be the durations in Table 3. In this case, Table 4G and Table 4H show examples of correspondences between a priority and a duration.

**Table 4G: Example of a correspondence between a priority and a duration**

| Priority | Duration (Δ*ᵢ*) (a unit may be s) |
|---|---|
| 1 | 16 • 10⁻⁶ |
| 2 | 25 • 10⁻⁶ |
| 3 | 34• 10⁻⁶ |
| 4 | 43 • 10⁻⁶ |
| 5 | 52 • 10⁻⁶ |
| 6 | 61 • 10⁻⁶ |
| 7 | T*_{symbol}* |
| 8 | T*_{symbol}* |

**Table 4H: Example of a correspondence between a priority and a duration**

| Priority | Duration index (*i*) | Duration (Δi) (a unit may be s) of a CPE |
|---|---|---|
| 1 | 0 | 16 • 10⁻⁶ |
| 2 | 1 | 25 • 10⁻⁶ |
| 3 | 2 | 34• 10⁻⁶ |
| 4 | 3 | 43 • 10⁻⁶ |
| 5 | 4 | 52 • 10⁻⁶ |
| 6 | 5 | 61 • 10⁻⁶ |
| 7 | 6 | T*_{symbol}* |
| 8 | 6 | T*_{symbol}* |

### (2) Implementation 2

In Implementation 2, there may be a correspondence between a priority and a channel preemption parameter (which may also be briefly referred to as a parameter), one priority may correspond to one or more parameters, and different priorities correspond to different parameters.

Optionally, the correspondence between a priority and a parameter may be predefined; or the correspondence between a priority and a parameter is preconfigured. This is not specifically limited.

Optionally, the priority of the sidelink information corresponds to one parameter (namely, a first parameter), and the first terminal device may determine the duration of the first CPE based on the first parameter and a second duration.

Alternatively, the priority of the sidelink information corresponds to a plurality of parameters, and the plurality of parameters include the first parameter. The first terminal device selects one parameter (for example, the selected parameter is the first parameter) from the plurality of parameters, and determines the duration of the first CPE based on the first parameter and the second duration.

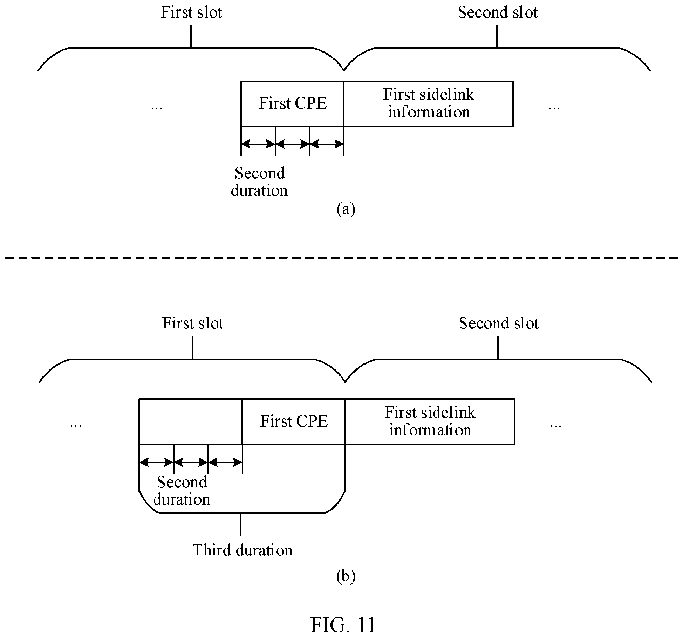

In an example, a higher priority indicates a larger corresponding parameter, and a lower priority indicates a smaller corresponding parameter. Table 5A shows an example of a correspondence between a priority and a parameter. Based on this example, that the first terminal device determines the duration of the first CPE based on the first parameter and the second duration may mean that the first terminal device uses a product of the first parameter and the second duration as the duration of the first CPE. For example, if the first parameter is 3 and the second duration is 9 µs, the duration of the CPE is 27 µs, as shown in (a) in FIG. 11. The second duration may be predefined in a protocol, or may be preconfigured. This is not specifically limited. In this embodiment of this application, that the second duration is 9 µs is used as an example. In another possible example, the second duration may be 10 µs or another value.

**Table 5A: Example of a correspondence between a priority and a parameter**

| Priority | Parameter |
|---|---|
| 1 | 15 and 16 |
| 2 | 13 and 14 |
| 3 | 11 and 12 |
| 4 | 9 and 10 |
| 5 | 7 and 8 |
| 6 | 5 and 6 |
| 7 | 3 and 4 |
| 8 | 1 and 2 |

In another example, a higher priority indicates a smaller parameter, and a lower priority indicates a larger corresponding parameter. Table 5B shows an example of a correspondence between a priority and a parameter. Based on this example, that the first terminal device determines the duration of the first CPE based on the first parameter and the second duration may be that the first terminal device determines the duration of the first CPE based on the first parameter, the second duration, and a third duration. For example, the duration of the first CPE is equal to a difference between the third duration and a product (namely, a product of the first parameter and the second duration), as shown in (b) in FIG. 11.

**Table 5B: Example of a correspondence between a priority and a parameter**

| Priority | Parameter |
|---|---|
| 1 | 1 and 2 |
| 2 | 3 and 4 |
| 3 | 5 and 6 |
| 4 | 7 and 8 |
| 5 | 9 and 10 |
| 6 | 11 and 12 |
| 7 | 13 and 14 |
| 8 | 15 and 16 |

For Implementation 1 and Implementation 2, Implementation 2 is used as an example, and when the priority of the sidelink information corresponds to a plurality of parameters, the first terminal device may randomly select one parameter from the plurality of parameters; or the first terminal device may select one parameter from the plurality of parameters based on a predetermined rule. The predetermined rule may mean that the first terminal device selects a largest parameter or a smallest parameter from the plurality of parameters. This is not specifically limited.

S1002: The first terminal device sends the first CPE.

S1003: The first terminal device sends the first sidelink information.

The first CPE is in a first time unit, the first sidelink information is in the second time unit, and the second time unit is a next time unit of the first time unit.

For example, the time unit is a slot, the first CPE is in the first slot, and the first slot is a previous slot of a second slot. In other words, the second slot is a next slot of the first slot. For ease of description, the following provides detailed descriptions by using an example in which the time unit is a slot.

Optionally, an end location of the first CPE may be an end location of the first slot. In this manner, CPEs with different durations have a same end location, and CPEs with different lengths have different starting positions.

Therefore, "the first terminal device determines the duration of the first CPE based on the priority of the sidelink information" may also be understood as that the first terminal device determines a starting position of the first CPE based on the priority of the sidelink information.

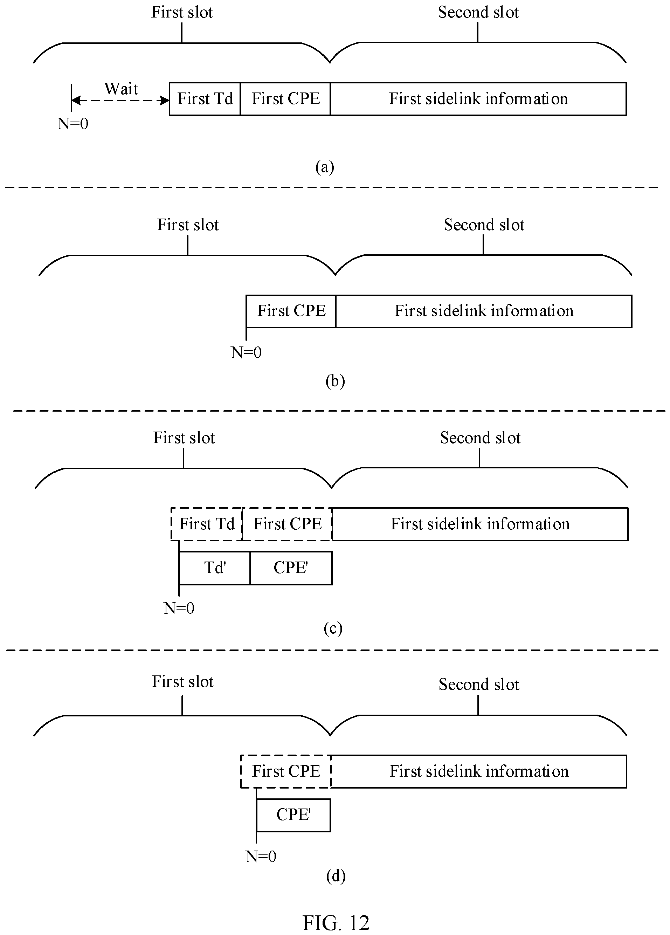

In a possible implementation, the first terminal device may perform channel access (namely, LBT). If channel access is completed at the starting position of the first CPE, the first terminal device may send the first CPE and the first sidelink information. For example, as shown in (a) in FIG. 12, that the first terminal device completes channel access at the starting position of the first CPE may mean that the first terminal device rolls back N to 0 in the first slot, and after waiting for a period of time, learns through listening that the channel is idle within a defer duration (referred to as a first duration Td) before the starting position of the first CPE. In this case, for example, the first terminal device rolls back N to 0 at a time point ta in the first slot. The time point ta is before the starting position of the first CPE, and a time interval between the time point ta and the starting position of the first CPE is greater than or equal to a duration of the first duration Td. Alternatively, as shown in (b) in FIG. 12, that the first terminal device completes channel access at the starting position of the first CPE may alternatively mean that the first terminal device rolls back N to 0 at the starting position of the first CPE. In other words, after rolling back N to 0, the first terminal device may immediately send the first CPE.

In another possible embodiment, as shown in (c) in FIG. 12, if the time point ta is before the starting position of the first CPE, and the time interval between the time point ta and the starting position of the first CPE is less than the duration of the first Td, the first terminal device may listen to, from the time point ta within a listening duration Td', whether the channel is idle, and may send CPE' if the channel is idle. A duration of Td' is equal to the duration of the first Td, and a duration of CPE' is less than the duration of the first CPE. As shown in (d) in FIG. 12, if the time point ta is after the starting position of the first CPE, the first terminal device may use the time point ta as a starting position of CPE', and send CPE'. The duration of CPE' is less than the duration of the first CPE. In other words, in (c) and (d) in FIG. 12, after the first terminal device determines the duration of the first CPE, because the first terminal device does not complete channel access at the starting position of the first CPE, the first terminal device may adjust a duration of an actually sent CPE based on a time point at which channel access is completed.

In this embodiment of this application, descriptions are mainly provided by using an example in which the first terminal device completes channel access at the starting position of the first CPE.

According to the method in Embodiment 1, the first terminal device determines the duration of the first CPE based on the priority of the sidelink information (namely, the first sidelink information) of the first terminal device. In this way, when a plurality of terminal devices need to send sidelink information on a frequency domain resource of a same channel in a same slot, the plurality of terminal devices may determine the duration of the CPE based on priorities of respective sidelink information. Because priorities of sidelink information of different terminal devices may be different, a duration that is of the CPE and that is determined by the different terminal devices may be different. Therefore, a probability that different terminal devices conflict with each other is reduced, and it is convenient to ensure that a terminal device with a high service priority preempts a channel.

In a possible implementation, the frequency domain resource of the first sidelink information includes all frequency domain resources of the first channel.

In other words, when the frequency domain resource of the first sidelink information includes all the frequency domain resources of the first channel, the first terminal device may determine the duration of the first CPE based on the priority of the first sidelink information.

In this case, because the frequency domain resource of the first sidelink information includes all the frequency domain resources of the first channel, if another terminal device uses the frequency domain resource of the first channel in the second slot, a conflict occurs because the first terminal device and the another terminal device simultaneously use a same resource. Therefore, the first terminal device may determine the duration of the first CPE based on the priority of the first sidelink information, to contend for the first channel with the another terminal device. If the priority of the first sidelink information is high (higher than a priority of sidelink information of the another terminal device), the first terminal device may access the first channel, and the another terminal device is blocked, so that a probability that different terminal devices conflict with each other can be reduced, and it is convenient to ensure that the terminal device with a high service priority preempts a channel.

In addition, when the frequency domain resource of the first sidelink information includes some frequency domain resources of the first channel, the first terminal device may share different frequency domain resources of a same channel with the another terminal device. The first terminal device may determine the duration of the first CPE based on the priority of the sidelink information of the first terminal device and the priority of the sidelink information of the another terminal device, so that the first terminal device and the another terminal device simultaneously access a same channel. For details, refer to Embodiment 2.

### Embodiment 2

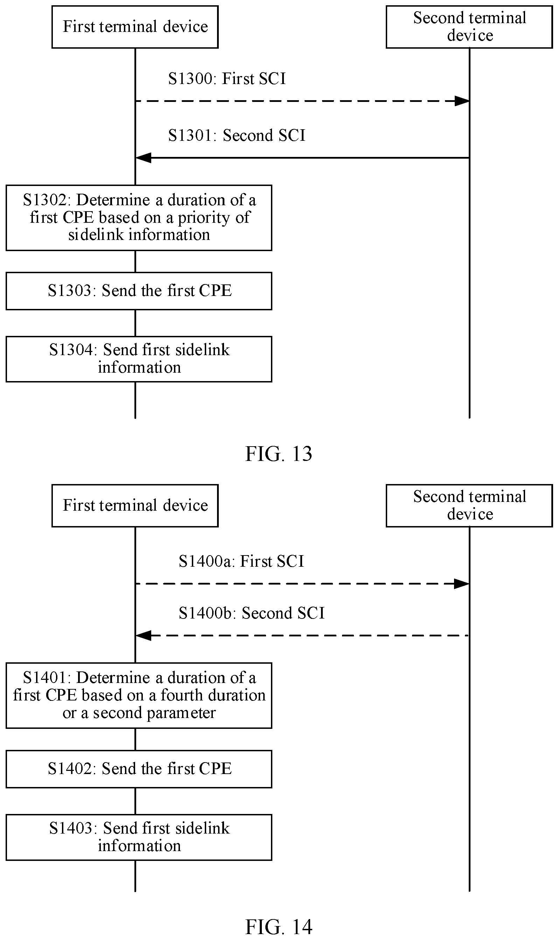

FIG. 13 is a schematic flowchart corresponding to a communication method according to Embodiment 2 of this application. As shown in FIG. 13, the method includes the following steps.

S1301: A first terminal device receives second SCI of a second terminal device.

Herein, the second SCI indicates a time domain resource and a frequency domain resource of second sidelink information to be sent by the second terminal device.

In other words, the second terminal device may send the second SCI, to notify another terminal device of a time-frequency resource reserved by the second terminal device.

The time domain resource of the second sidelink information is in a second slot, and the frequency domain resource of the second sidelink information is on a first channel. In other words, the second terminal device reserves the frequency domain resource of the first channel in the second slot. The first terminal device receives the second SCI of the second terminal device. To be specific, the first terminal device learns through listening that the second terminal device reserves the frequency domain resource of the first channel in the second slot.

In addition, a time domain resource of first sidelink information to be sent by the first terminal device is also in the second slot, and a frequency domain resource of the first sidelink information is also on the first channel.

S1302: The first terminal device determines a duration of a first CPE based on a priority of sidelink information.

Optionally, the priority of the sidelink information is a priority of the first sidelink information, and the priority of the first sidelink information is higher than a priority of second sidelink information.

Alternatively, the priority of the sidelink information is a priority of second sidelink information, and a priority of the first sidelink information is lower than the priority of the second sidelink information.

In other words, when the first terminal device learns through listening that another terminal device (for example, the second terminal device) reserves the frequency domain resource of the first channel in the second slot, the first terminal device needs to determine whether to use a priority of sidelink information of the first terminal device or a priority of sidelink information of the second terminal device.

The foregoing manner may alternatively be described as follows: When the priority of the first sidelink information is higher than the priority of the second sidelink information, the first terminal device determines the duration of the first CPE based on the priority of the first sidelink information; or when the priority of the first sidelink information is lower than the priority of the second sidelink information, the first terminal device determines the duration of the first CPE based on the priority of the second sidelink information.

There may be a plurality of manners in which the first terminal device obtains the priority of the second sidelink information. For example, the second SCI further indicates the priority of the second sidelink information, so that the first terminal device may obtain the priority of the second sidelink information after receiving the second SCI.

S1303: The first terminal device sends the first CPE.

S1304: The first terminal device sends the first sidelink information.

For specific descriptions of S1303 and S1304, refer to S1002 and S1003. Details are not described herein again.

According to the method in Embodiment 2, when the first terminal device needs to send the first sidelink information on the frequency domain resource of the first channel in the second slot, and the first terminal device learns through listening that the second terminal device reserves the frequency domain resource of the first channel in the second slot, the first terminal device determines the duration of the CPE based on the highest priority in the priority of the first sidelink information and the priority of the second sidelink information, to increase a probability that the first terminal device successfully accesses the channel.
(1) In a possible implementation, the frequency domain resource of the first sidelink information includes some rather than all frequency domain resources of the first channel. In other words, when the first terminal device learns through listening that the second terminal device reserves the frequency domain resource of the first channel in the second slot, and the frequency domain resource of the first sidelink information includes some frequency domain resources of the first channel, the first terminal device may determine the duration of the CPE based on a highest priority in the priority of the first sidelink information and the priority of the second sidelink information.
   In this case, because the frequency domain resource of the first sidelink information includes some frequency domain resources of the first channel, to be specific, the second terminal device may not be affected when the first terminal device accesses the first channel in the second slot (for example, the first terminal device may use a frequency domain resource that is of the first channel and that is not reserved by the second terminal device), the first terminal device may determine the duration of the CPE based on the highest priority in the priority of the first sidelink information and the priority of the second sidelink information, to increase as much as possible the probability that the first terminal device successfully accesses the channel. Otherwise, for example, if the frequency domain resource of the first sidelink information includes all frequency domain resources of the first channel, the first terminal device may determine the duration of the CPE based on the priority of the first sidelink information, to fairly contend for the first channel with the another terminal device, and reduce a probability that different terminal devices conflict with each other. For details, refer to Embodiment 1.
(2) In still another possible implementation, the procedure shown in FIG. 13 may further include: S1300: The first terminal device sends first SCI. The first SCI indicates the time domain resource and the frequency domain resource of the first sidelink information.

In other words, when the first terminal device learns through listening that the second terminal device reserves the frequency domain resource of the first channel in the second slot, and the first terminal device also reserves the frequency domain resource of the first channel in the second slot, the first terminal device may determine the duration of the CPE based on the highest priority in the priority of the first sidelink information and the priority of the second sidelink information. Because both the first terminal device and the second terminal device reserve the frequency domain resource of the first channel in the second slot, the frequency domain resource of the first sidelink information includes some frequency domain resources of the first channel, the frequency domain resource of the second sidelink information includes some frequency domain resources of the first channel, and the frequency domain resource of the first sidelink information is different from the frequency domain resource of the second sidelink information.

In this case, if the second terminal device receives the first SCI of the first terminal device, the second terminal device may also determine the duration of the CPE based on the highest priority in the priority of the first sidelink information and the priority of the second sidelink information. In other words, both the first terminal device and the second terminal device determine the duration of the CPE based on the highest priority in the priority of the first sidelink information and the priority of the second sidelink information. In this way, it can be ensured that the first terminal device and the second terminal device simultaneously access the channel, to prevent a plurality of terminal devices from blocking each other.

Further, priorities selected by the first terminal device and the second terminal device are the highest priority in the priorities of the sidelink information of the first terminal device and the second terminal device, so that a probability that the first terminal device and the second terminal device successfully access the channel simultaneously can be increased.

### Embodiment 3

FIG. 14 is a schematic flowchart corresponding to a communication method according to Embodiment 3 of this application. As shown in FIG. 14, the method includes the following steps.

S1401: A first terminal device determines a duration of a first CPE based on a fourth duration or a second parameter.
(1) Optionally, the fourth duration is predefined, or the fourth duration is preconfigured.

In a possible implementation, when the fourth duration is preconfigured, the fourth duration may be information included in preconfigured resource pool information.

For example, Table 4A is used as an example. The fourth duration may be the same as a duration in Table 4A, or the fourth duration may be different from a duration in Table 4A.

There may be a plurality of specific implementations in which the first terminal device determines the duration of the first CPE based on the fourth duration.

For example, the duration of the first CPE is equal to the fourth duration, or the duration of the first CPE is equal to a third duration minus the fourth duration.

(2) Optionally, the second parameter is predefined, or the second duration is preconfigured.

In a possible implementation, when the second duration is preconfigured, the second parameter may be information included in preconfigured resource pool information.

For example, Table 5A is used as an example. The second parameter may be the same as a parameter in Table 5A, or the second parameter may be different from a parameter in Table 5A.

There may be a plurality of specific implementations in which the first terminal device determines the duration of the first CPE based on the second parameter.

For example, the duration of the first CPE is equal to a product of the second parameter and the second duration; or the duration of the first CPE is equal to the third duration minus a product of a first parameter and the second duration. For details, refer to the descriptions in Embodiment 1.

S1402: The first terminal device sends the first CPE.

S1403: The first terminal device sends first sidelink information.

For specific descriptions of S1402 and S1403, refer to S1002 and S1003. Details are not described herein again.

According to the method in Embodiment 3, the first terminal device determines the duration of the CPE based on the fourth duration or the second parameter. In this way, when a plurality of terminal devices need to send sidelink information on different frequency domain resources of a same channel in a same slot, the plurality of terminal devices may determine the duration of the CPE based on the fourth duration or the second parameter, so that the plurality of terminal devices simultaneously access the channel, to prevent the plurality of terminal devices from blocking each other.
(1) In a possible implementation, a frequency domain resource of the first sidelink information includes some frequency domain resources of the first channel.

In other words, when the frequency domain resource of the first sidelink information includes some frequency domain resources of the first channel, the first terminal device may determine the duration of the CPE based on the fourth duration or the second parameter.

In this case, because the frequency domain resource of the first sidelink information includes some frequency domain resources of the first channel, in other words, another terminal device may not be affected (for example, the first terminal device may use a resource of the first channel with the another terminal device in a frequency division manner) when the first terminal device accesses the first channel in the second slot, the first terminal device may determine the duration of the CPE based on the fourth duration or the second parameter. Similarly, if the another terminal device needs to send sidelink information on the some frequency domain resources of the first channel in the second slot (in other words, a frequency domain resource of the sidelink information includes the some frequency domain resources of the first channel), the another terminal device may also determine the duration of the CPE based on the fourth duration or the second parameter. In this way, the first terminal device and the another terminal device may simultaneously access the channel, to prevent different terminal devices from blocking each other.

(2) In another possible implementation, the procedure shown in FIG. 14 may further include: S1400a: The first terminal device sends first SCI. The first SCI indicates the time domain resource and the frequency domain resource of the first sidelink information.

In other words, when the first terminal device reserves a frequency domain resource of the first channel in the second slot, the first terminal device may determine the duration of the CPE based on the fourth duration or the second parameter.

In this case, if a plurality of other terminal devices also reserve the frequency domain resource of the first channel in the second slot, the plurality of terminal devices may all determine the duration of the CPE based on the fourth duration or the second parameter, so that the first terminal device and the plurality of terminal devices can simultaneously access the channel, to prevent different terminal devices from blocking each other.

(3) In still another possible implementation, the procedure shown in FIG. 14 may further include: S1400b: The first terminal device receives SCI from the second terminal device. Second SCI indicates a time domain resource and a frequency domain resource of second sidelink information.

In other words, when the first terminal device learns through listening that the second terminal device reserves the frequency domain resource of the first channel in the second slot, the first terminal device may determine the duration of the CPE based on the fourth duration or the second parameter.

In this case, if the second terminal device also learns through listening that another terminal device reserves the frequency domain resource of the first channel in the second slot, the second terminal device may also determine the duration of the CPE based on the fourth duration or the second parameter. In this way, the first terminal device and the second terminal device may simultaneously access the channel, to prevent different terminal devices from blocking each other.

It may be understood that the three implementations described herein may be separately implemented, or may be implemented in any combination. For example, in a solution in which implementations are combined, the procedure shown in FIG. 14 may further include S1400a and S1400b.

In other words, when the first terminal device reserves the frequency domain resource of the first channel in the second slot, and the first terminal device learns through listening that the second terminal device also reserves the frequency domain resource of the first channel in the second slot, the first terminal device may determine the duration of the CPE based on the fourth duration or the second parameter.

In this case, because the second terminal device reserves the frequency domain resource of the first channel in the second slot, if the second terminal device also learns through listening that another terminal device reserves the frequency domain resource of the first channel in the second slot, the second terminal device may also determine the duration of the CPE based on the fourth duration or the second parameter. In this way, the first terminal device and the second terminal device may simultaneously access the channel, to prevent different terminal devices from blocking each other.

### Embodiment 4

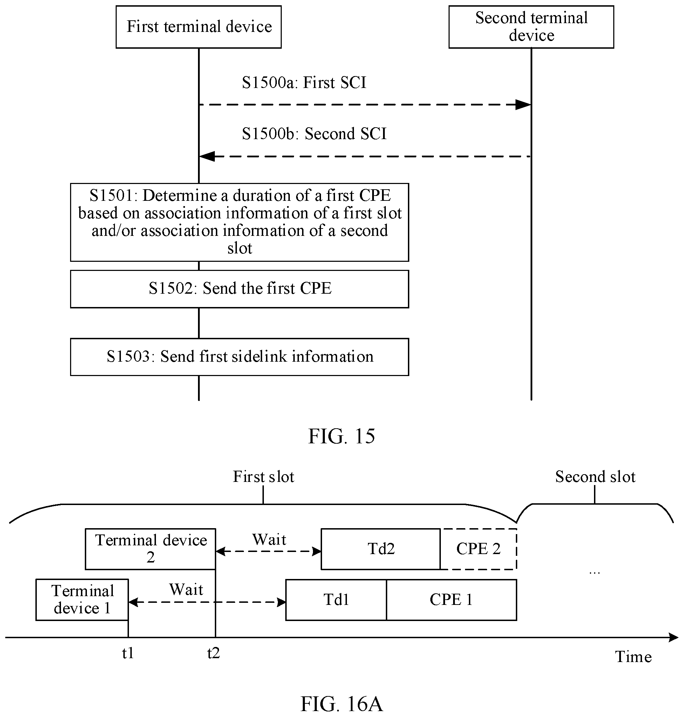

FIG. 15 is a schematic flowchart corresponding to a communication method according to Embodiment 4 of this application. As shown in FIG. 15, the method includes the following steps.

S1501: A first terminal device determines a duration of a first CPE based on association information of a first slot and/or association information of a second slot.

A time domain resource of first sidelink information to be sent by the first terminal device is in the second slot, and the first slot is a previous slot of the second slot.

Optionally, the association information of the first slot includes at least one of the following:
(1) a system frame number (system frame number, SFN) of a system frame to which the first slot belongs;
(2) a direct frame number (direct frame number, DFN) of a direct frame to which the first slot belongs; and
(3) a number or a sequence number of the first slot in the system frame or the direct frame.

Optionally, the association information of the second slot includes at least one of the following:
(1) the system frame number of the system frame to which the first slot belongs;
(2) the direct frame number of the direct frame to which the first slot belongs; and
(3) the number or the sequence number of the first slot in the system frame or the direct frame.

A length of the SFN is 10 bits (bit), and a specific value of the SFN ranges from 0 to 1023. When a value of SFN reaches a maximum value 1023, numbering starts from 0 again. One system frame may include 10 subframes, a duration of one subframe is 1 ms, and one system frame may include different quantities of slots based on different subcarrier spacings. For example, when the subcarrier spacing is 30 kHz, one system frame includes 20 slots. In addition, after a terminal device is synchronized with a network device, the terminal device may determine the SFN. Similarly, after the terminal device is synchronized with a satellite navigation system (global navigation satellite system, GNSS), the terminal device may determine the DFN. For different terminal devices, SFNs or DFNs to which a same slot belongs are the same.

There may be a plurality of specific implementations in which the first terminal device determines the duration of the first CPE based on the association information of the first slot and/or the association information of the second slot. The following describes several possible examples.
(1) In an example, the first terminal device may select one duration (for example, the selected duration is a first duration) from a plurality of durations based on the SFN of the system frame to which the first slot belongs, and determine the duration of the first CPE based on the first duration.

For example, if the plurality of durations include W durations, and each duration corresponds to one duration index, a duration index of the first duration selected by the first terminal device may be equal to a duration of SFNmodW, and mod represents a modulo operation.

For example, for the plurality of durations and duration indexes, refer to Table 3. That is, W=7. For the system frame to which the first slot belongs, SFN=102. In this case, Duration index of the first duration=102mod7=4. In other words, the first duration is 52 µs. Further, the duration of the first CPE may be equal to 52 µs, or the duration of the first CPE may be equal to T*_{symbol}-*52 µs.

(2) In another example, the first terminal device may select one duration (for example, the selected duration is a first duration) from a plurality of durations based on the SFN of the system frame to which the first slot belongs and the number or the sequence number of the first slot in the system frame, and determine the duration of the first CPE based on the first duration.

For example, for the plurality of durations and duration indexes, refer to Table 3. That is, W=7. For the system frame to which the first slot belongs, SFN=102. The first slot is a 4^{th} slot in the system frame. In this case, Duration index of the first duration=(102+4)mod7=1. In other words, the first duration is 25 µs. Further, the duration of the first CPE may be equal to 25 µs, or the duration of the first CPE may be equal to T*_{symbol}-*25 µs.

(3) In still another example, the first terminal device may select one duration (for example, the selected a duration is a first duration) from a plurality of durations based on the number or the sequence number of the first slot in the system frame, and determine the duration of the first CPE based on the first duration.

For example, for the plurality of durations and duration indexes, refer to Table 3. That is, W=7. Current SFN=102. The first slot is a 4^{th} slot in the system frame. In this case, Duration index of the first duration=4mod7=4. In other words, the first duration is 52 µs. Further, the duration of the first CPE may be equal to 52 µs, or the duration of the first CPE may be equal to T*_{symbol}-*52 µs.

S1502: The first terminal device sends the first CPE.

S1503: The first terminal device sends first sidelink information.

For specific descriptions of S1502 and S1503, refer to S1002 and S1003. Details are not described herein again.

According to the method in Embodiment 4, the first terminal device determines the duration of the CPE based on the association information of the first slot and/or the association information of the second slot. In this way, when a plurality of terminal devices need to send sidelink information on different frequency domain resources of a same channel in a same slot (for example, the second slot), the plurality of terminal devices may determine the duration of the CPE based on the association information of the first slot and/or the association information of the second slot, so that the plurality of terminal devices simultaneously access the channel.
(1) In a possible implementation, a frequency domain resource of the first sidelink information includes some frequency domain resources of the first channel.

In other words, when the frequency domain resource of the first sidelink information includes the some frequency domain resources of the first channel, the first terminal device may determine the duration of the CPE based on the association information of the first slot and/or the association information of the second slot.

In this case, because the frequency domain resource of the first sidelink information includes some frequency domain resources of the first channel, in other words, another terminal device may not be affected (for example, the first terminal device may use a resource of the first channel with the another terminal device in a frequency division manner) when the first terminal device accesses the first channel in the second slot, the first terminal device may determine the duration of the CPE based on the association information of the first slot and/or the association information of the second slot. Similarly, if the another terminal device needs to send sidelink information on the some frequency domain resources of the first channel in the second slot (in other words, a frequency domain resource of the sidelink information includes the some frequency domain resources of the first channel), the another terminal device may also determine the duration of the CPE based on the association information of the first slot and/or the association information of the second slot. In this way, the first terminal device and the another terminal device may simultaneously access the channel, to prevent different terminal devices from blocking each other.

(2) In another possible implementation, the procedure shown in FIG. 15 may further include: S1500a: The first terminal device sends first SCI. The first SCI indicates the time domain resource and the frequency domain resource of the first sidelink information.

In other words, when the first terminal device reserves a frequency domain resource of the first channel in the second slot, the first terminal device may determine the duration of the CPE based on the association information of the first slot and/or the association information of the second slot.

In this case, if a plurality of terminal devices reserve the frequency domain resource of the first channel in the second slot, all the plurality of terminal devices may determine the duration of the CPE based on the association information of the first slot and/or the association information of the second slot, so that the plurality of terminal devices can simultaneously access the channel, and send the sidelink information on respective reserved frequency domain resources, to prevent different terminal devices from blocking each other.

(3) In still another possible implementation, the procedure shown in FIG. 15 may further include: S1500b: The first terminal device receives SCI from the second terminal device. Second SCI indicates a time domain resource and a frequency domain resource of second sidelink information.

In other words, when the first terminal device learns through listening that the second terminal device reserves a frequency domain resource of the first channel in the second slot, the first terminal device may determine the duration of the CPE based on the association information of the first slot and/or the association information of the second slot.

In this case, if the second terminal device also learns through listening that another terminal device reserves the frequency domain resource of the first channel in the second slot, the second terminal device may also determine the duration of the CPE based on the association information of the first slot and/or the association information of the second slot. In this way, the first terminal device and the second terminal device may simultaneously access the channel, to prevent different terminal devices from blocking each other.

It may be understood that the three implementations described herein may be separately implemented, or may be implemented in any combination. For example, in a solution in which implementations are combined, the procedure shown in FIG. 15 may further include S1500a and S1500b.

In other words, when the first terminal device reserves the frequency domain resource of the first channel in the second slot, and the first terminal device learns through listening that the second terminal device also reserves the frequency domain resource of the first channel in the second slot, the first terminal device may determine the duration of the CPE based on the association information of the first slot and/or the association information of the second slot.

In this case, because the second terminal device reserves the frequency domain resource of the first channel in the second slot, if the second terminal device also learns through listening that another terminal device reserves the frequency domain resource of the first channel in the second slot, the second terminal device may also determine the duration of the CPE based on the association information of the first slot and/or the association information of the second slot. In this way, the first terminal device and the second terminal device may simultaneously access the channel, to prevent different terminal devices from blocking each other.

In Embodiment 1 to Embodiment 4, some possible implementations in which the first terminal device determines the duration of the CPE are described. Based on Embodiment 1 and Embodiment 2, possible implementations of a terminal device in some cases are described herein.
**(1)** A first terminal device does not send first SCI (in other words, the first terminal device does not reserve a frequency domain resource of a first channel in a second slot), and the first terminal device does not receive SCI sent by M terminal devices (in other words, the first terminal device does not learn through listening that another terminal device reserves the frequency domain resource of the first channel in the second slot). In this case, the first terminal device may determine a duration of a CPE based on a priority of first sidelink information.

In this way, for Scenario 1, a terminal device 1 may determine a duration of a CPE 1 based on a priority of the terminal device 1, and a terminal device 2 may determine a duration of a CPE 2 based on a priority of the terminal device 2. For details, refer to FIG. 16A.

When a priority of sidelink information 1 of the terminal device 1 is different from a priority of sidelink information 2 of the terminal device 2, a duration of the CPE 1 is different from a duration of the CPE 2 (for details, refer to the foregoing descriptions), and the priority of the sidelink information 1 is higher than the priority of the sidelink information 2. In this case, the duration of the CPE 1 is longer than the duration of the CPE 2. Therefore, before the terminal device 2 sends the CPE 2, the terminal device 2 learns through listening that the terminal device 1 sends the CPE 1 (that is, the terminal device 2 learns, through listening in Td2, that a channel is busy). Therefore, the terminal device 2 may determine that channel access fails, and cannot send the sidelink information 2 in the second slot. In other words, the terminal device 1 preempts the channel by sending the CPE 1 in advance, and the terminal device 2 is blocked, to avoid a conflict between the terminal device 1 and the terminal device 2.

When the priority of the terminal device 1 is the same as the priority of the terminal device 2, because one priority may correspond to a plurality of parameters (or durations), the terminal device 1 may randomly select one parameter from a plurality of parameters corresponding to the priority of the sidelink information 1, and determine the duration of the CPE 1 based on the randomly selected parameter; and the terminal device 2 may randomly select one parameter from a plurality of parameters corresponding to the priority of the sidelink information 2, and determine the duration of the CPE 2 based on the randomly selected parameter. When the parameter selected by the terminal device 1 is different from the parameter selected by the terminal device 2, the duration of the CPE 1 is different from the duration of the CPE 2. Therefore, the terminal device 1 and the terminal device 2 do not conflict with each other. In other words, even if the priority of the sidelink information 1 is the same as the priority of the sidelink information 2, because one priority may correspond to a plurality of parameters, parameters randomly selected by the terminal device 1 and the terminal device 2 from the plurality of parameters may be different, to effectively reduce a probability that the terminal device 1 and the terminal device 2 conflict with each other.

**(2)** A first terminal device sends first SCI, and the first terminal device receives SCI sent by M terminal devices. In this case, the first terminal device may determine a duration of a first CPE based on a highest priority of sidelink information of M+1 terminal devices. The M+1 terminal devices include the first terminal device and the M terminal devices, the M terminal devices include a second terminal device, and M is an integer greater than or equal to 1. For example, the first terminal device may obtain priorities of the M terminal devices, and then obtains, through comparison, whether a priority of first sidelink information of the first terminal device is higher than a highest priority of sidelink information of the M terminal devices. There may be a plurality of manners in which the first terminal device obtains the priority of the sidelink information of the M terminal devices. For example, SCI sent by each of the M terminal devices may indicate a priority of sidelink information of the terminal device. Specifically, when the priority of the first sidelink information is greater than the highest priority of the sidelink information of the M terminal devices, the first terminal device may determine the duration of the first CPE based on the priority of the first sidelink information; or when the priority of the first sidelink information is less than or equal to the highest priority of the sidelink information of the M terminal devices, the first terminal device may determine the duration of the first CPE based on the highest priority of the sidelink information of the M terminal devices (for example, a priority of second sidelink information of the second terminal device).

For each of the M terminal devices (for example, the second terminal device), if the second terminal device receives the first SCI sent by the first terminal device and SCI sent by other M-1 terminal devices in the M terminal devices, the second terminal device may also determine a duration of a second CPE based on the highest priority of the sidelink information of the M+1 terminal devices.

Further, when the highest priority corresponds to one parameter (namely, the first parameter), the first terminal device determines the duration of the first CPE based on the first parameter, and the second terminal device also determines the duration of the second CPE based on the first parameter. Therefore, the duration of the first CPE is the same as the duration of the second CPE, so that the first terminal device and the second terminal device can simultaneously access a channel. When the highest priority corresponds to a plurality of parameters (including a first parameter), the first terminal device selects one parameter from the plurality of parameters based on a preset rule, and the second terminal device also selects one parameter from the plurality of parameters based on the preset rule. Therefore, the first terminal device and the second terminal device select a same parameter, and the duration of the first CPE is the same as the duration of the second CPE, so that the first terminal device and the second terminal device can simultaneously access a channel.

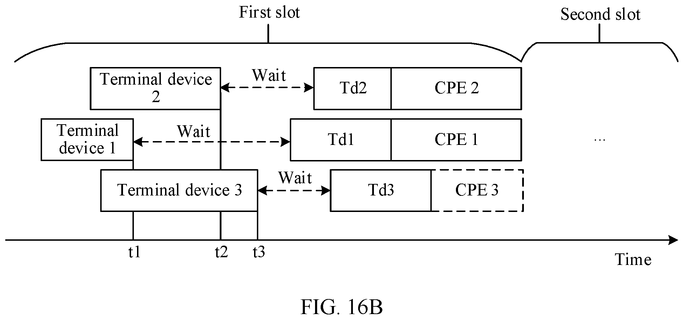

In this way, for Scenario 2, as shown in FIG. 16B, the terminal device 1 determines a duration of a CPE 1 based on a highest priority of the terminal device 1 and the terminal device 2, and the terminal device 2 also determines a duration of a CPE 2 based on the highest priority of the terminal device 1 and the terminal device 2. In this way, the duration that is of the CPE 1 and that is determined by the terminal device 1 is the same as the duration that is of the CPE 2 and that is determined by the terminal device 2, and the terminal device 1 and the terminal device 2 may simultaneously access the channel.

Further, if a terminal device 3 does not send SCI, and does not receive SCI sent by another terminal device, the terminal device 3 may determine a duration of a CPE 3 based on a priority of the terminal device 3.

If the duration of the CPE 3 is less than the duration of the CPE 1 (or the CPE 2), as shown in FIG. 16B, before the terminal device 3 sends the CPE 3, the terminal device 3 learns through listening of CPEs sent by the terminal device 1 and the terminal device 2 (in other words, the terminal device 3 learns, through listening in Td3, that a channel is busy). In this case, the terminal device 3 may determine that channel access fails, and cannot send sidelink information in a second slot. In other words, the terminal device 1 and the terminal device 2 may simultaneously access a channel, and the terminal device 3 is blocked, to prevent the terminal device 3 from conflicting with the terminal device 1 and the terminal device 2. If the duration of the CPE 3 is greater than the duration of the CPE 1 (or the CPE 2), the terminal device 3 may access a channel, and the terminal device 1 and the terminal device 2 are blocked, to prevent the terminal device 3 from conflicting with the terminal device 1 and the terminal device 2. If the duration of the CPE 3 is equal to the duration of the CPE 1 (or the CPE 2), a conflict may still occur between the terminal device 3 and the terminal device 1 and between the terminal device 3 and the terminal device 2. However, according to the method in this embodiment of this application, a probability that the terminal device 3 conflicts with the terminal device 1 and the terminal device 2 can be clearly reduced.

**(3)** A first terminal device sends first SCI, and the first terminal device does not receive SCI sent by another terminal device. In this case, the first terminal device may determine a duration of a CPE based on a priority of first sidelink information.

For example, there may be a plurality of scenarios in which "the first terminal device sends the first SCI, and the first terminal device does not receive the SCI sent by the another terminal device". For example, the first terminal device reserves all frequency domain resources of a first channel in a second slot, and no another terminal device reserves the frequency domain resource of the first channel in the second slot.

**(4)** A first terminal device does not send first SCI, and the first terminal device receives SCI sent by M terminal devices. In this case, **in a possible implementation,** the first terminal device may determine a duration of a CPE based on a highest priority of sidelink information of the M terminal devices.

In this way, for each (for example, the second terminal device) of the M terminal devices, the M terminal devices may also determine the duration of the CPE based on the highest priority of the sidelink information of the M terminal devices, so that the first terminal device and the M terminal devices may simultaneously access a channel, and the first terminal device may send, in a second slot, first sidelink information on a frequency domain resource of the first channel other than a frequency domain resource reserved by the M terminal devices.

**In another possible implementation,** when a priority of first sidelink information of the first terminal device is higher than a highest priority of sidelink information of the M terminal devices, the first terminal device may determine a duration of a CPE based on the priority of the first sidelink information, so that the first terminal device can preempt a first channel in a second slot by sending the CPE in advance, and the M terminal devices are blocked.

When the priority of the first sidelink information is less than or equal to the highest priority of the sidelink information of the M terminal devices, the first terminal device may determine the duration of the CPE based on the highest priority of the sidelink information of the M terminal devices, so that the first terminal device and the M terminal devices may simultaneously access a channel, and the first terminal device may send, in a second slot, first sidelink information on a frequency domain resource other than a frequency domain resource reserved by the M terminal devices.

**In still another possible implementation,** when a frequency domain resource of first sidelink information of the first terminal device includes all frequency domain resources of a first channel, the first terminal device may determine a duration of a CPE based on a priority of the first sidelink information, and the M terminal devices determine the duration of the CPE based on a highest priority of sidelink information of the M terminal devices, so that the first terminal device can fairly contend for the first channel with the M terminal devices.

When the frequency domain resource of the first sidelink information of the first terminal device includes some frequency domain resources of the first channel, the first terminal device may determine the duration of the CPE based on the highest priority of the sidelink information of the M terminal devices, so that the first terminal device and the M terminal devices may simultaneously access a channel, and the first terminal device may send, in a second slot, first sidelink information on a frequency domain resource other than a frequency domain resource reserved by the M terminal devices.

### Embodiment 5

In Embodiment 5, an end location of a first CPE in Embodiment 1 to Embodiment 4 is described.

### (1) Implementation 1

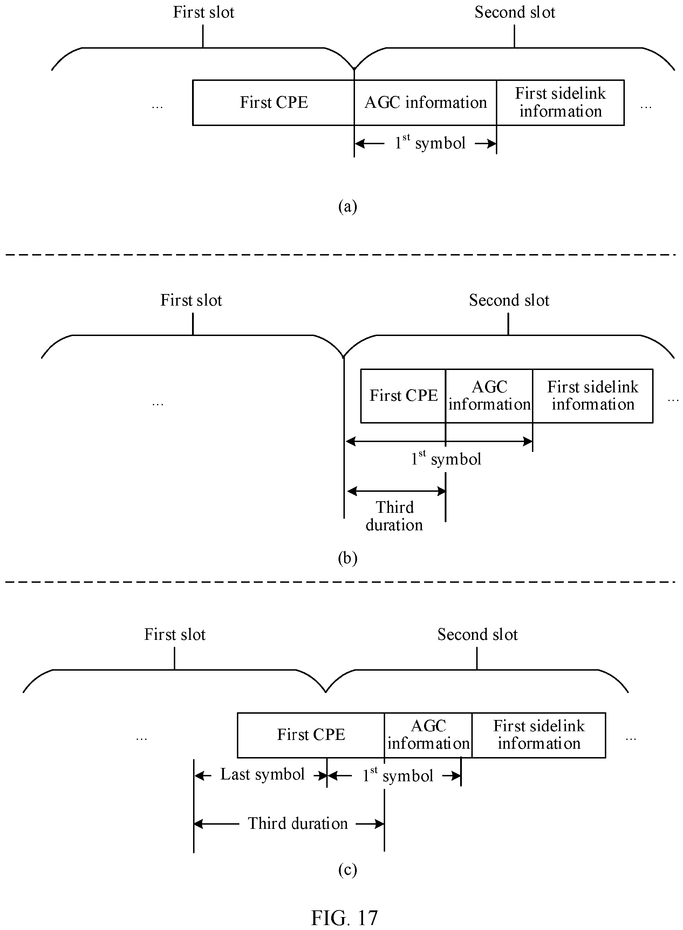

Optionally, the end location of the first CPE may be an end location of a first slot, as shown in (a) in FIG. 17.

### (2) Implementation 2

It can be learned from the foregoing descriptions of AGC that before sending first sidelink information in a second slot, a first terminal device first sends AGC information on a 1^{st} symbol in the second slot. In other words, the 1^{st} symbol in the second slot is used to send the AGC information. It is considered that a duration of the AGC information sent by the first terminal device may be equal to a duration of the 1^{st} symbol, or may be less than a duration of the 1^{st} symbol. Therefore, when the duration of the AGC information is less than the duration of the 1^{st} symbol, a first CPE may occupy a partial duration of the 1^{st} symbol.

Optionally, an end location of the first CPE may be a third preset location, and a time interval between the third preset location and an end location of the 1^{st} symbol in the second slot is equal to the duration of the AGC information.

For example, if the duration of the 1^{st} symbol is 71 µs, and the duration of the AGC information is 17.8 µs (namely, a duration corresponds to one symbol when the subcarrier spacing is 60 kHz), the time interval between the third preset location and the end location of the 1^{st} symbol in the second slot is equal to 71-17.8=53.2 µs.

Optionally, the first CPE is on the 1^{st} symbol in the second slot.

In this case, in a possible implementation, when a duration of the first CPE is equal to a difference between a third duration and a first duration, the third duration may be a difference between the duration of the 1^{st} symbol in the second slot and the duration of the AGC information (that is, 71-17.8=53.2 µs). For details, refer to (b) in FIG. 17.

Optionally, the first CPE is on a last symbol in the first slot and the 1^{st} symbol in the second slot.

In this case, in a possible implementation, when a duration of the first CPE is equal to a difference between a third duration and a first duration, the third duration may be a difference between the duration of the 1^{st} symbol in the second slot and the duration of the AGC information plus the duration of the last symbol in the first slot. For details, refer to (c) in FIG. 17.

It may be understood that when "the third duration is the difference between the duration of the 1^{st} symbol in the second slot and the duration of the AGC information plus the duration of the last symbol in the first slot", if the first duration is less than the duration of the last symbol in the first slot, the first CPE is on the last symbol in the first slot and the 1^{st} symbol in the second slot; or if the first duration is greater than or equal to the duration of the last symbol in the first slot, the first CPE is on the 1^{st} symbol in the second slot.

### Embodiment 6

In this embodiment of this application, there may be a plurality of manners in which a first terminal device determines a duration of a CPE. For example, in the manner in Embodiment 1 (or Embodiment 2), the first terminal device determines the duration of the CPE based on a priority of first sidelink information; in the manner in Embodiment 3, the first terminal device determines the duration of the CPE based on a fourth duration or a second parameter; and in the manner in Embodiment 4, the first terminal device determines the duration of the CPE based on association information of a first slot and/or association information of a second slot.

Optionally, for the plurality of manners, the first terminal device may select one manner from the plurality of manners to determine the duration of the CPE.

For example, when the first terminal device needs to send sidelink information i in a slot i, before sending the sidelink information i, the first terminal device may select a manner i from the plurality of manners to determine a duration of a CPE i, and send the CPE i. After a period of time, when the first terminal device needs to send the sidelink information j in a slot j, before sending the sidelink information j, the first terminal device may select a manner j from the plurality of manners to determine a duration of a CPE j, and send the CPE j. The manner i and the manner j may be a same manner, or may be different manners.

There may be a plurality of specific implementations in which the first terminal device selects one manner from the plurality of manners. In a possible implementation, the first terminal device may select, based on whether a frequency domain resource of the first sidelink information includes all frequency domain resources of a first channel, one manner from the plurality of manners to determine the duration of the CPE. In other words, the first terminal device may determine whether the frequency domain resource of the first sidelink information includes all the frequency domain resources of the first channel. If the frequency domain resource of the first sidelink information includes all the frequency domain resources of the first channel, the first terminal device may select a manner 1 from the plurality of manners to determine the duration of the CPE. If the frequency domain resource of the first sidelink information does not include all the frequency domain resources of the first channel, the first terminal device may select a manner 2 from the plurality of manners to determine the duration of the CPE. The manner 1 is different from the manner 2.
(1) Optionally, when the frequency domain resource of the first sidelink information includes all the frequency domain resources of the first channel (in other words, the first terminal device determines to send the first sidelink information on all the frequency domain resources of the first channel), the first terminal device determines the duration of the CPE based on the priority of the first sidelink information. In other words, the first terminal device may determine the duration of the CPE in the manner in Embodiment 1 (or Embodiment 2).

In this way, when the frequency domain resource of the first sidelink information includes all the frequency domain resources of the first channel, for example, the first sidelink information is in the second slot. If another terminal device also needs to use the frequency domain resource of the first channel in the second slot, the first terminal device faces a problem that a conflict occurs when another terminal device uses a same resource. Therefore, the first terminal device may determine the duration of the CPE based on the priority of the first sidelink information, to contend for the first channel with the another terminal device.

(2) Optionally, when the frequency domain resource of the first sidelink information includes some frequency domain resources of the first channel (in other words, the first terminal device determines to send the first sidelink information on the some frequency domain resources of the first channel), the first terminal device determines the duration of the CPE based on the fourth duration or the second parameter, or the first terminal device determines the duration of the CPE based on the association information of the first slot and/or the association information of the second slot. In other words, the first terminal device may determine the duration of the CPE in the manner in Embodiment 3 or Embodiment 4.

In this way, when the frequency domain resource of the first sidelink information includes some frequency domain resources of the first channel, for example, the first sidelink information is in the second slot. If another terminal device also needs to use the frequency domain resource of the first channel in the second slot, to improve resource utilization, the first terminal device and another terminal device may simultaneously access the first channel. In this case, the first terminal device faces a problem that the first terminal device may be unable to access the first channel because the first terminal device and the another terminal device block each other. Therefore, the first terminal device may determine the duration of the CPE in the manner in Embodiment 3 or Embodiment 4, to simultaneously access the first channel with the another terminal device.

For Embodiment 1 to Embodiment 6, it may be understood that the foregoing mainly describes a difference between different embodiments in Embodiment 1 to Embodiment 6. For content other than the difference, Embodiment 1 to Embodiment 6 may be mutually referenced. In addition, in a same embodiment, different implementations, different examples, or different cases may also be mutually referenced.

The foregoing mainly describes the solutions provided in embodiments of this application from a perspective of interaction between terminal devices. It may be understood that, to implement the foregoing functions, the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

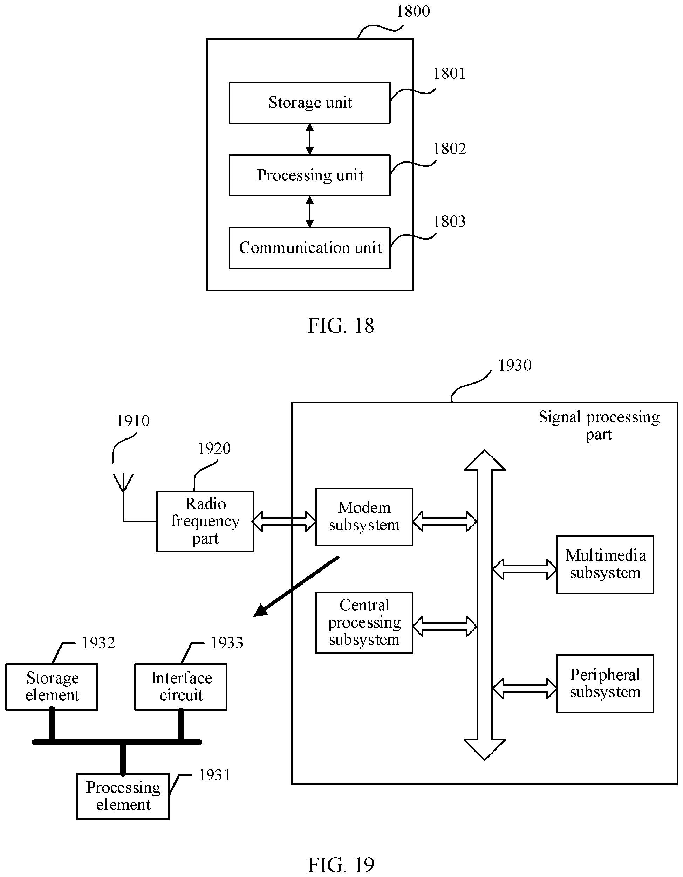

When an integrated unit is used, FIG. 18 is a block diagram of a possible example of an apparatus according to an embodiment of this application. As shown in FIG. 18, an apparatus 1800 may include a processing unit 1802 and a communication unit 1803. The processing unit 1802 is configured to control and manage an action of the apparatus 1800. The communication unit 1803 is configured to support communication between the apparatus 1800 and another device. Optionally, the communication unit 1803 is also referred to as a transceiver unit, and may include a receiving unit and/or a sending unit, respectively configured to perform a receiving operation and a sending operation. The apparatus 1800 may further include a storage unit 1801, configured to store program code and/or data of the apparatus 1800.

The apparatus 1800 may be a first terminal device in the foregoing embodiments. The processing unit 1802 may support the apparatus 1800 in performing an action of the first terminal device in the foregoing method examples. Alternatively, the processing unit 1802 mainly performs an internal action of the first terminal device in the method example, and the communication unit 1803 may support the communication between the apparatus 1800 and another device.

For example, in an embodiment, the processing unit 1802 is configured to determine a duration of a CPE based on a priority of sidelink information; and the communication unit 1803 is configured to send the CPE.

In a possible design, the communication unit 1803 is further configured to send first sidelink information. The CPE is in a first time unit, the first sidelink information is in a second time unit, and the second time unit is a next time unit of the first time unit.

In a possible design, the communication unit 1803 is further configured to: send first sidelink control information SCI, where the first SCI indicates a time domain resource and a frequency domain resource of the first sidelink information sent by the first terminal device; and/or receive second SCI from a second terminal device, where the second SCI indicates a time domain resource and a frequency domain resource of second sidelink information sent by the second terminal device. The time domain resource of the first sidelink information sent by the first terminal device and the time domain resource of the second sidelink information are in the second time unit, the frequency domain resource of the first sidelink information and the frequency domain resource of the second sidelink information are on a first channel, and the frequency domain resource of the second sidelink information is different from the frequency domain resource of the first sidelink information.

In a possible design, the second SCI further indicates a priority of the second sidelink information.

In a possible design, the priority of the sidelink information is a priority of the first sidelink information, and the first sidelink information is sidelink information of the first terminal device; or the priority of the sidelink information is a priority of the first sidelink information, the priority of the first sidelink information is higher than the priority of the second sidelink information, and the second sidelink information is sidelink information of the second terminal device; or the priority of the sidelink information is the priority of the second sidelink information, and a priority of the first sidelink information is lower than the priority of the second sidelink information.

In a possible design, the priority of the sidelink information corresponds to at least one duration; and the processing unit 1802 is specifically configured to determine the duration of the CPE based on a first duration in the at least one duration.

In a possible design, the processing unit 1802 is specifically configured to: determine that the duration of the CPE is the first duration; or determine that the duration of the CPE is a difference between a third duration and the first duration. The third duration is predefined or preconfigured.

In a possible design, the priority of the sidelink information corresponds to at least one parameter; and the processing unit 1802 is specifically configured to determine the duration of the CPE based on a first parameter in the at least one parameter.

In a possible design, the processing unit 1802 is specifically configured to: determine that the duration of the CPE is a product of the first parameter and a second duration, where the second duration is predefined or preconfigured; or determine that the duration of the CPE is a difference between a third duration and the product, where the third duration is predefined or preconfigured.

In a possible design, the second duration is 9 microseconds.

In a possible design, the sidelink information is carried on a PSSCH.

It should be understood that division into units of the apparatus is merely logical function division. In an actual implementation, all or some units may be integrated into one physical entity may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing method, for example, one or more application-specific integrated circuits (application-specific integrated circuit, ASIC), one or more microprocessors (digital signal processor, DSP), or one or more field programmable gate arrays (field programmable gate arrays, FPGAs), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 19 is a diagram of a structure of a terminal device according to an embodiment of this application. The terminal device may be used in the communication system shown in FIG. 1A to FIG. 1D, to implement operations of the terminal device in the foregoing embodiments. As shown in FIG. 19, the terminal device includes an antenna 1910, a radio frequency part 1920, and a signal processing part 1930. The antenna 1910 is connected to the radio frequency part 1920. In a downlink direction, the radio frequency part 1920 receives, through the antenna 1910, information sent by a network device, and sends, to the signal processing part 1930 for processing, the information sent by the network device. In an uplink direction, the signal processing part 1930 processes information of the terminal device, and sends the information to the radio frequency part 1920. The radio frequency part 1920 processes the information of the terminal device, and then sends processed information to the network device through the antenna 1910.

The signal processing part 1930 may include a modem subsystem, configured to process data at each communication protocol layer. The signal processing part 1930 may further include a central processing subsystem, configured to process an operating system and an application layer of the terminal device. In addition, the signal processing part 1930 may further include another subsystem, for example, a multimedia subsystem or a peripheral subsystem. The multimedia subsystem is configured to control a camera, a screen display, and the like of the terminal device. The peripheral subsystem is configured to be connected to another device. The modem subsystem may be a separately disposed chip.

The modem subsystem may include one or more processing elements 1931, for example, include a main control CPU and another integrated circuit. In addition, the modem subsystem may further include a storage element 1932 and an interface circuit 1933. The storage element 1932 is configured to store data and a program. However, a program for performing the methods performed by the terminal device in the foregoing methods may not be stored in the storage element 1932, but is stored in a memory outside the modem subsystem, and is loaded by the modem subsystem for use. The interface circuit 1933 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element whose processing element is located on a same chip, that is, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the methods performed by the terminal device in the foregoing method embodiments.

In still another implementation, units of the terminal device that implement the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing method may be integrated together, and implemented in a form of SoC. The SoC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 18. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory. A function of the storage element may be the same as a function of the storage unit described in FIG. 18. The storage element may be a memory, or may be a general name of a plurality of memories.

The terminal device shown in FIG. 19 can implement all processes related to the terminal device in the foregoing method embodiments. Operations and/or functions of the modules in the terminal device shown in FIG. 19 are intended to implement the corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to a first terminal device or a module in the first terminal device, and the method comprises:
determining a duration of a cyclic prefix extension CPE based on a priority of sidelink information; and
sending the CPE.

2. The method according to claim 1, wherein the method further comprises:
sending first sidelink information, wherein the CPE is in a first time unit, the first sidelink information is in a second time unit, and the second time unit is a next time unit of the first time unit.

3. The method according to claim 2, wherein the method further comprises:
sending first sidelink control information SCI, wherein the first SCI indicates a time domain resource and a frequency domain resource of the first sidelink information; and/or
receiving second SCI from a second terminal device, wherein the second SCI indicates a time domain resource and a frequency domain resource of second sidelink information of the second terminal device, wherein
the time domain resource of the first sidelink information and the time domain resource of the second sidelink information are in the second time unit, the frequency domain resource of the first sidelink information and the frequency domain resource of the second sidelink information are on a first channel, and the frequency domain resource of the second sidelink information is different from the frequency domain resource of the first sidelink information.

4. The method according to claim 3, wherein the second SCI further indicates a priority of the second sidelink information.

5. The method according to any one of claims 1 to 4, wherein the priority of the sidelink information is a priority of the first sidelink information, and the first sidelink information is sidelink information of the first terminal device; or
the priority of the sidelink information is a priority of the first sidelink information, the priority of the first sidelink information is higher than the priority of the second sidelink information, and the second sidelink information is sidelink information of the second terminal device; or
the priority of the sidelink information is the priority of the second sidelink information, and a priority of the first sidelink information is lower than the priority of the second sidelink information.

6. The method according to any one of claims 1 to 5, wherein the priority of the sidelink information corresponds to at least one duration; and
the determining a duration of a CPE based on a priority of sidelink information comprises:
determining the duration of the CPE based on a first duration in the at least one duration.

7. The method according to claim 6, wherein the determining the duration of the CPE based on a first duration in the at least one duration comprises:
determining that the duration of the CPE is the first duration; or
determining that the duration of the CPE is a difference between a third duration and the first duration, wherein the third duration is predefined or preconfigured.

8. The method according to any one of claims 1 to 5, wherein the priority of the sidelink information corresponds to at least one parameter;
the determining a duration of a CPE based on a priority of sidelink information comprises:
determining the duration of the CPE based on a first parameter in the at least one parameter.

9. The method according to claim 8, wherein the determining the duration of the CPE based on a first parameter in the at least one parameter comprises:
determining that the duration of the CPE is a product of the first parameter and a second duration, wherein the second duration is predefined or preconfigured; or
determining that the duration of the CPE is a difference between a third duration and the product, wherein the third duration is predefined or preconfigured.

10. The method according to claim 9, wherein the second duration is 9 microseconds.

11. The method according to any one of claims 1 to 10, wherein the sidelink information is carried on a physical sidelink shared channel PSSCH.

12. A communication method, wherein the method is applied to a terminal device or a module in the terminal device, and the method comprises:
determining a duration of a cyclic prefix extension CPE based on a fourth duration or a second parameter; and
sending the CPE, wherein
the fourth duration is predefined or preconfigured, and the second parameter is predefined or preconfigured.

13. The method according to claim 12, wherein the determining a duration of a CPE based on a fourth duration comprises:
determining that the duration of the CPE is the fourth duration; or
determining that the duration of the CPE is a difference between a third duration and the fourth duration, wherein the third duration is predefined or preconfigured.

14. The method according to claim 12, wherein the determining a duration of a CPE based on a second parameter comprises:
determining that the duration of the CPE is a product of the second parameter and a second duration, wherein the second duration is predefined or preconfigured; or
determining that the duration of the CPE is a difference between a third duration and the product, wherein the third duration is predefined or preconfigured.

15. A communication apparatus, comprising a module or unit configured to perform the method according to any one of claims 1 to 11, or a module or unit configured to perform the method according to any one of claims 12 to 14.

16. A communication apparatus, comprising a processor, wherein the processor is coupled to a memory, the memory stores a computer program, and the processor is configured to invoke the computer program in the memory, so that the communication apparatus performs the method according to any one of claims 1 to 11 or the method according to any one of claims 12 to 14.

17. A computer-readable storage medium, wherein the storage medium stores a computer program or instructions, and when the computer program or the instructions are executed by a computer, the method according to any one of claims 1 to 11 or the method according to any one of claims 12 to 14 is implemented.

18. A computer program product, wherein when a computer reads and executes the computer program product, the computer is enabled to perform the method according to any one of claims 1 to 11 or the method according to any one of claims 12 to 14.
